(19) Europäisches Patentamt
European Patent Office
Office européen des brevets

(11) **EP 1 053 850 B1**

(12) **EUROPEAN PATENT SPECIFICATION**

(45) Date of publication and mention
of the grant of the patent:
**14.07.2004 Bulletin 2004/29**

(51) Int Cl.[7]: **B29C 45/14**, B32B 27/00

(21) Application number: **99954366.3**

(86) International application number:
**PCT/JP1999/006131**

(22) Date of filing: **04.11.1999**

(87) International publication number:
**WO 2000/027608 (18.05.2000 Gazette 2000/20)**

(54) **SHEET FOR FOIL DECORATING, METHOD OF MANUFACTURING IT AND FOIL-DECORATED ARTICLE USING THE SAME**

LAGE ZUR FOLIENDEKORATION, VERFAHREN ZU IHRER HERSTELLUNG UND FOLIENDEKORIERTER GEGENSTAND

FEUILLE POUR DECORATION DE TOLE, PROCEDE DE SA FABRICATION ET ARTICLE A TOLE DECOREE UTILISANT CETTE FEUILLE

(84) Designated Contracting States:
**DE FR GB IT NL**

(30) Priority: **05.11.1998 JP 31441998**
**17.11.1998 JP 32573198**
**16.06.1999 JP 16923399**
**16.06.1999 JP 16923499**
**30.06.1999 JP 18489699**
**31.08.1999 JP 24453799**

(43) Date of publication of application:
**22.11.2000 Bulletin 2000/47**

(73) Proprietor: **NISSHA PRINTING CO., LTD.**
**Nakagyo-ku Kyoto-shi Kyoto 604-8551 (JP)**

(72) Inventor: **Mori, Fujio, Nissha Printing Co., Ltd.**
**Kyoto 604-8551 (JP)**

(74) Representative: **HOFFMANN - EITLE**
**Patent- und Rechtsanwälte**
**Arabellastrasse 4**
**81925 München (DE)**

(56) References cited:
**JP-A- 4 075 085**      **JP-A- 7 009 483**
**JP-A- 7 195 418**      **JP-A- 9 300 397**
**JP-A- 10 015 986**     **JP-A- 11 320 608**

**Description**

Technical Field

The present invention relates to an in-mold decorating sheet, as well as an in-mold decorated article using the same, for use in decorating the surfaces of molded products of three-dimensional shape including interior automotive trims such as console box, center cluster, and switch base, exterior automotive trims such as side mudguard, bumper, wheel covers and braid, and component parts for household electrical appliances such as refrigerator door and air-conditioner front panel.

Background Art

A widely used method for decorating automotive trims and household electrical appliance parts as described above includes forming a pattern by performing colored coating, plating, or the like on a desired color and pattern, and thereafter applying an entire-surface overcoating for protection of the pattern. However, coating and plating have been problematic in terms of environmental hygiene.

In contrast to this, as a method for decorating the surface without coating, there has been known an in-mold decorating method using an in-mold decorating sheet.

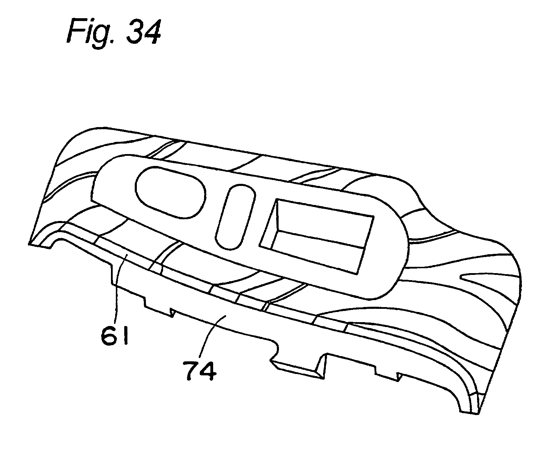

This method includes setting an in-mold decorating sheet into an injection mold, clamping the mold, injecting a molten molding resin into a cavity of the mold, and allowing the molding resin to set, where the in-mold decorating sheet 61 is integrally bonded to the surface of the resin molded article 74, by which an in-mold decorated article is obtained (see Fig. 34).

The in-mold decorating sheet is, generally, composed of a pattern layer having a pattern, a substrate sheet serving for covering and protecting the pattern layer, and a backing sheet for protecting the decorating sheet against heat and pressure caused by the molding resin or serving as a pattern sheet by itself.

However, such in-mold decorating sheets as described above have had the following issues, respectively.

A first issue is that unless the in-mold decorating sheet is made from a material having certain properties, the in-mold decorating sheet could be neither three-dimensionally worked into a desired configuration nor processed for in-mold decorating.

That is, in a case where the in-mold decorating sheet is made from a material such as a pure ethylene-vinyl acetate film, there has been an issue that heat of the molding resin injected in injection molding process is applied to the in-mold decorating sheet and, besides, the in-mold decorating sheet is stretched along the flow of the molding resin, leading to a break of the in-mold decorating sheet.

Also, in another case where the in-mold decorating sheet is made from a material having high heat resistance and low elongatability such as biaxially oriented polyethylene terephthalate, polyimide, polyether etherketone, polysulfone, polyethersulfone, polyetherimide, or polyamide-imide films, there has been an issue that it would be difficult to work the in-mold decorating sheet into a three-dimensional configuration. In particular, the more deeply the in-mold decorating sheet is drawn, the more difficult it is to work the in-mold decorating sheet into a three-dimensional configuration.

Further, when the in-mold decorating sheet is made from a material having low rigidity, the in-mold decorating sheet becomes liable to collapse in its three-dimensional configuration after the three-dimensional working of the in-mold decorating sheet, leading to a lowered configuration retainability. In such a case, there has been an issue that it becomes difficult to process an in-mold decorating sheet for trimming or in-mold decorating.

A transfer foil, having a base material layer with a tensile break strength of about 100 kg/mm and about 200% break elongation is described in JP 04075085 A.

Therefore, it is an object of the present invention to provide an in-mold decorating sheet, as well as an in-mold decorated article using this in-mold decorating sheet, which are suited for working into a three-dimensional configuration without breaking due to heat of the molding resin injected in the injection molding process, and which are superior in configuration retainability after the working into a three-dimensional configuration.

Disclosure Of Invention

In order to accomplish the above object, the present invention has the following constitutions.

According to the present invention, there is provided an in-mold decorating sheet having high three-dimensional workability for use in a manufacturing method of an in-mold decorated article, the method comprising: setting an in-mold decorating sheet into a mold for in-mold decorating sheet injection-molding; after clamping the mold, injecting molding resin and allowing the molding resin to be cooled and solidified, by which entirety or part of the in-mold decorating sheet is integrally bonded to a surface of the molding resin, wherein

the in-mold decorating sheet comprises at least a substrate sheet and a backing sheet, exhibits a colored state, and has the following characteristic values:

(1) when a tensile test is carried out with a 10 mm wide test specimen of the in-mold decorating sheet fixed between a pair of chucks at a chuck-to-chuck distance of 5 mm, by applying a load at a constant rate of 500 mm/min to one end of the test specimen under an ambient temperature condition of 62 - 94°C, the test specimen exhibits a tensile load at break of not less than 0.226 N (23 gf);

(2) the in-mold decorating sheet changes in properties due to heat within a temperature range of 40 - 200°C; and when a tensile test is carried out with a 10 mm wide test specimen of the in-mold decorating sheet fixed between a pair of chucks at a chuck-to-chuck distance of 5 mm, by applying a load of 0.196 N (20 gf) at a constant rate of 500 mm/min to one end of the test specimen under an ambient temperature condition within a range from the temperature of property change to a temperature at which the in-mold decorating sheet is thermally decomposed, the test specimen exhibits a tensile elongation at break of not less than 130%.

Furthermore, there is provided a method for manufacturing an in-mold decorating sheet according to claims 16 and 17.

Finally, there is provided an in-mold decorated article according to claim 19.

Brief Description Of Drawings

These and other aspects and features of the present invention will become clear from the following description taken in conjunction with the preferred embodiments thereof with reference to the accompanying drawings, in which:

Fig. 1 is a sectional view showing one of the steps of a method for manufacturing an in-mold decorated article using an in-mold decorating sheet according to a first embodiment of the present invention;

Fig. 2 is a sectional view showing one of the steps of the method for manufacturing the in-mold decorated article using the in-mold decorating sheet according to the first embodiment;

Fig. 3 is a sectional view showing one of the steps of the method for working the in-mold decorated article using the in-mold decorating sheet according to the first embodiment;

Fig. 4 is a sectional view showing the in-mold decorated article obtained by the in-mold decorated article manufacturing method according to the first embodiment;

Fig. 5 is a sectional view showing the in-mold decorating sheet according to the first embodiment;

Fig. 6 is a sectional view showing the in-mold decorating sheet according to the first embodiment;

Fig. 7 is a sectional view showing the in-mold decorating sheet according to the first embodiment;

Fig. 8 is a sectional view showing the in-mold decorating sheet according to the first embodiment;

Fig. 9 is a sectional view showing a three-dimensionally worked in-mold decorating sheet to be used for the in-mold decorated article manufacturing method according to the first embodiment;

Fig. 10 is a sectional view showing one of the steps of the method for manufacturing the in-mold decorated article according to the first embodiment;

Fig. 11 is a sectional view showing.one of the steps of the method for manufacturing the in-mold decorated article according to the first embodiment;

Fig. 12 is a perspective view showing a tensile tester for measuring the tensile strength of an in-mold decorating sheet;

Fig. 13 is a plan view showing a portion for fixing a test specimen in the tensile tester;

Fig. 14 is a sectional view showing a portion for fixing a test specimen in the tensile tester;

Fig. 15 is a view showing a pencil scratching tester for measuring pencil hardness of a substrate film (substrate sheet) on its one surface opposite to the surface on which the substrate film is bonded to molding resin;

Fig. 16 is a view showing integrating sphere type light transmittance measuring equipment to be used for determining the haze value of the substrate film (substrate sheet);

Fig. 17 is a sectional view showing the insert film as the in-mold decorating sheet according to the first embodiment of the present invention;

Fig. 18 is a sectional view showing one of the steps of the method for manufacturing an insert film as an in-mold decorating sheet according to a sixth embodiment of the present invention;

Fig. 19 is a sectional view showing one of the steps of the method for manufacturing the insert film as the in-mold decorating sheet according to the sixth embodiment of the present invention;

Fig. 20 is a sectional view showing one of the steps of the method for manufacturing the insert film as the in-mold decorating sheet according to the sixth embodiment of the present invention;

Fig. 21 is a sectional view showing one of the steps of the method for manufacturing an in-mold decorated article by using the insert film as the in-mold decorating sheet according to the sixth embodiment of the present invention;

Fig. 22 is a sectional view showing one of the steps of the method for manufacturing the in-mold decorated article by using the insert film as the in-mold decorating sheet according to the sixth embodiment of the present invention;

Fig. 23 is a sectional view showing one of the steps of the method for manufacturing the in-mold decorated article by using the insert film as the in-mold decorating sheet according to the sixth embodiment of the present invention;

Fig. 24 is a sectional view showing the in-mold decorated article obtained by using the insert film as the in-mold decorating sheet according to the sixth embodiment of the present invention;

Fig. 25 is a perspective view showing equipment for measuring tensile elongation at break of an insert film as an in-mold decorating sheet;

Fig. 26 is a plan view showing a portion for fixing a test specimen in the equipment for measuring tensile elongation at break;

Fig. 27 is a sectional view showing the portion for fixing the test specimen in the equipment for measuring tensile elongation at break;

Fig. 28 is a sectional view showing a decorating insert film as an in-mold decorating sheet according to a third embodiment of the present invention;

Fig. 29 is a sectional view showing the decorating insert film as the in-mold decorating sheet according to the third embodiment of the present invention;

Fig. 30 is a sectional view showing a method for manufacturing an in-mold decorated article using a trimmed decorating insert film as the in-mold decorating sheet according to the third embodiment of the present invention;

Fig. 31 is a sectional view showing a method for manufacturing the in-mold decorated article using the trimmed decorating insert film as the in-mold decorating sheet according to the third embodiment of the present invention;

Fig. 32 is a sectional view showing a trimming example of a decorating insert film as an in-mold decorating sheet;

Fig. 33 is a sectional view showing a trimming example of a decorating insert film as an in-mold decorating sheet;

Fig. 34 is a perspective view showing an example of the in-mold decorated article as an in-mold decorating sheet;

Fig. 35 is a sectional view showing a method for manufacturing an insert-molded decorated article using a trimmed decorating insert film according to the prior art;

Fig. 36 is a sectional view showing a method for manufacturing an insert-molded decorated article using a trimmed decorating insert film according to the prior art;

Fig. 37 is a sectional view showing a method for manufacturing an insert-molded decorated article using a trimmed decorating insert film according to the prior art;

Fig. 38 is a sectional view showing a preforming decorating sheet as an in-mold decorating sheet according to a fifth embodiment of the present invention;

Fig. 39 is a sectional view showing the preforming decorating sheet as the in-mold decorating sheet according to the fifth embodiment of the present invention;

Fig. 40 is a sectional view showing a preforming decorating sheet as an in-mold decorating sheet according to a fourth embodiment of the present invention;

Fig. 41 is a sectional view showing the preforming decorating sheet as the in-mold decorating sheet according to the fourth embodiment of the present invention;

Fig. 42 is a sectional view showing an in-mold decorating sheet according to a sixth embodiment of the present invention;

Fig. 43 is a sectional view showing the in-mold decorating sheet according to the sixth embodiment of the present invention;

Fig. 44 is a sectional view showing the in-mold decorating sheet according to the sixth embodiment of the present invention;

Fig. 45 is a sectional view showing a state of the embodiment in which the backing sheet adjacent to the substrate sheet is given by a colored sheet of metallic red or the like with black pigment mixed;

Fig. 46 is a sectional view showing a state of the embodiment in which the backing sheet adjacent to the substrate sheet with a thickness of 200 $\mu$m or less is given by a colored sheet of metallic red or the like with black pigment mixed;

Fig. 47 is a sectional view showing a state of the embodiment in which the backing sheet is adjacent to the colored substrate sheet;

Fig. 48 is a sectional view showing a state of the embodiment in which a transparent colored pattern layer is set between two colorless, transparent substrate sheets with a total thickness of 200 $\mu$m or less;

Fig. 49 is a graph showing a relationship between a tensile test curve at an environmental temperature of 25°C and a tensile test curve at temperatures at which the environmental temperature varies in nature due to heat;

Fig. 50 is a side view of a portion for fixing a test specimen in the pencil scratching tester of Fig. 15; and

Fig. 51 is a plan view of a portion for fixing a test specimen in the pencil scratching tester of Fig. 15.

Best Mode for Carrying Out the Invention

Before the description of the present invention proceeds, it is to be noted that like parts are designated by like reference numerals throughout the accompanying drawings.

(First Embodiment)

Hereinbelow, a first embodiment of the present invention is described in detail with reference to the accompanying drawings.

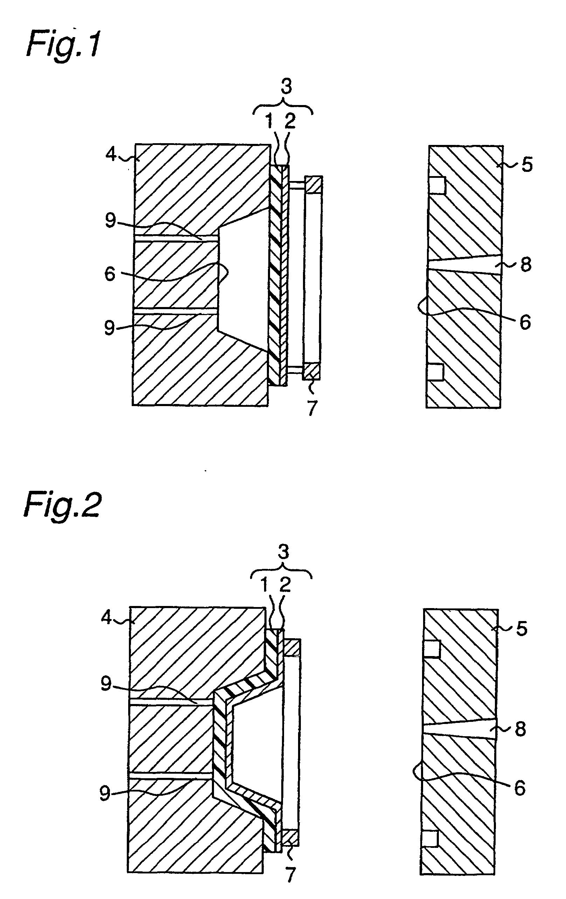

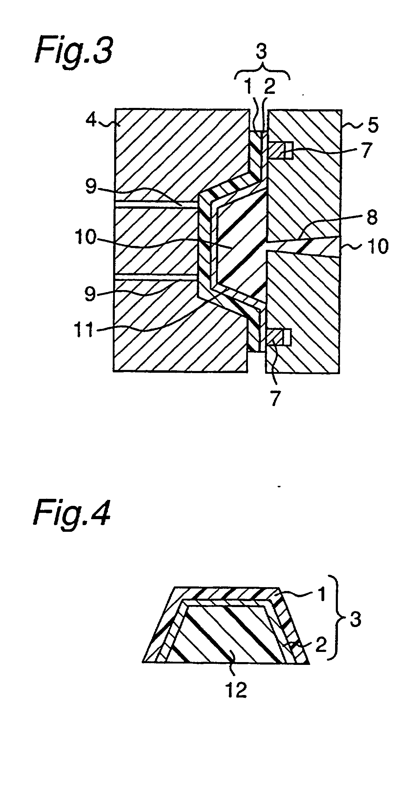

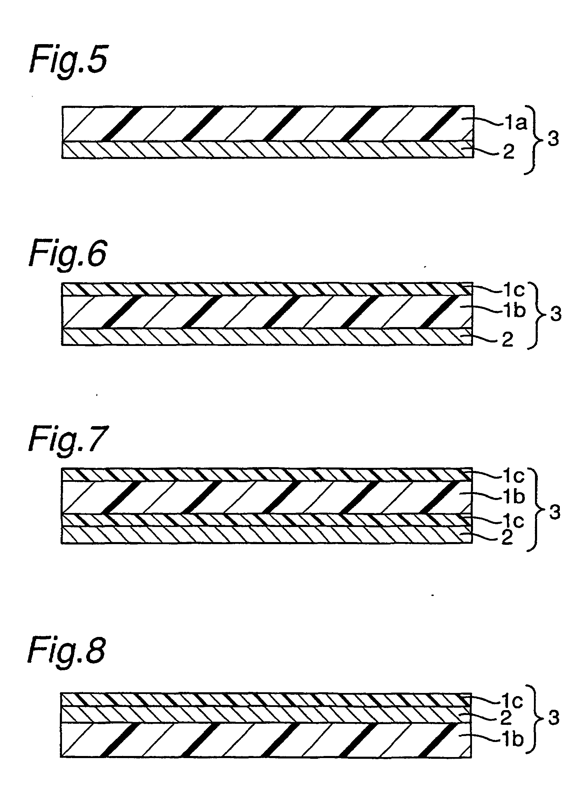

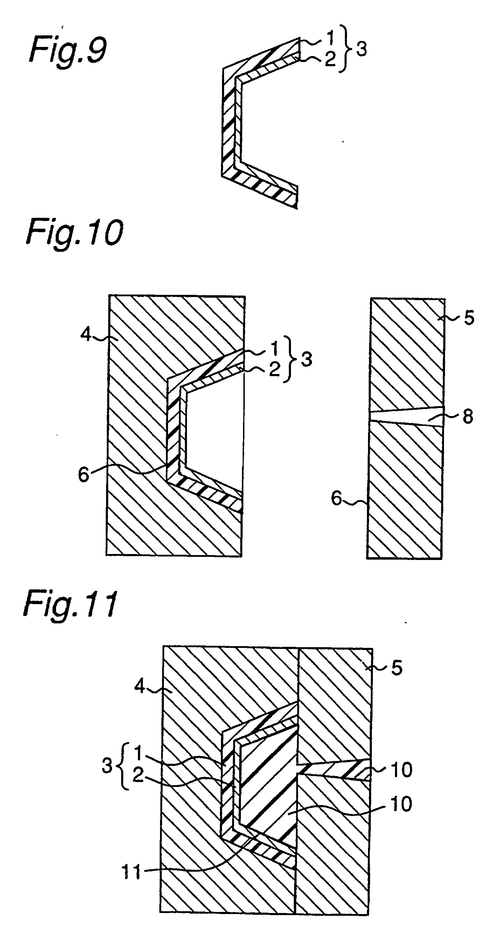

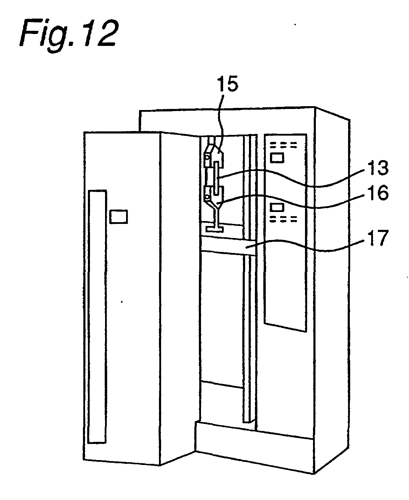

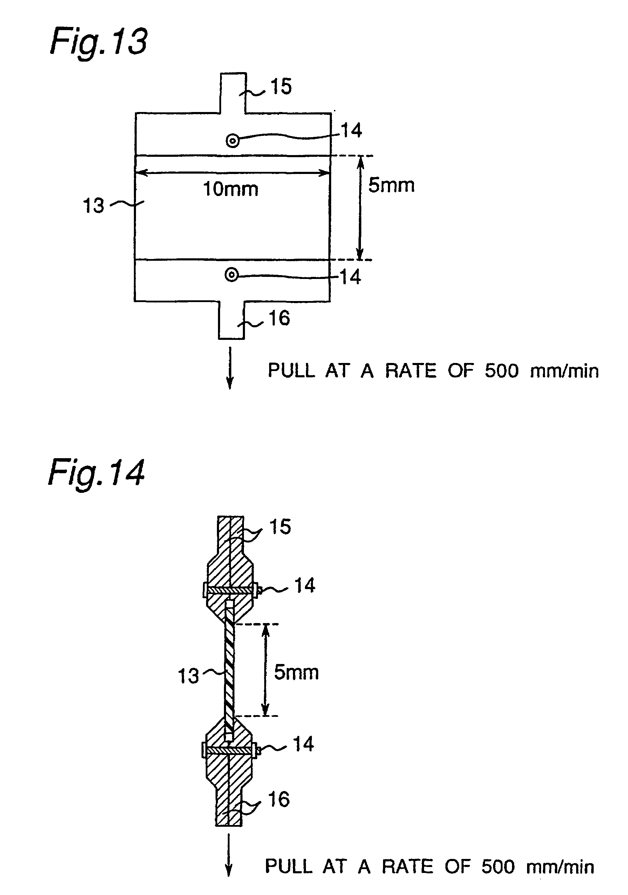

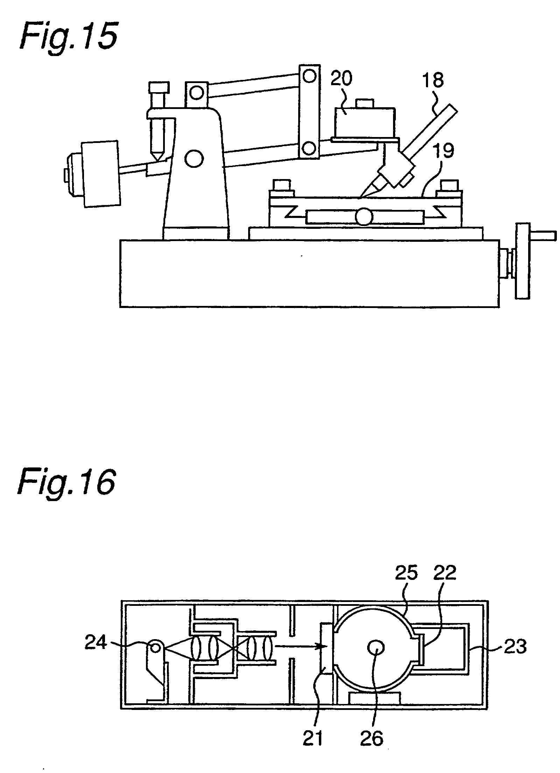

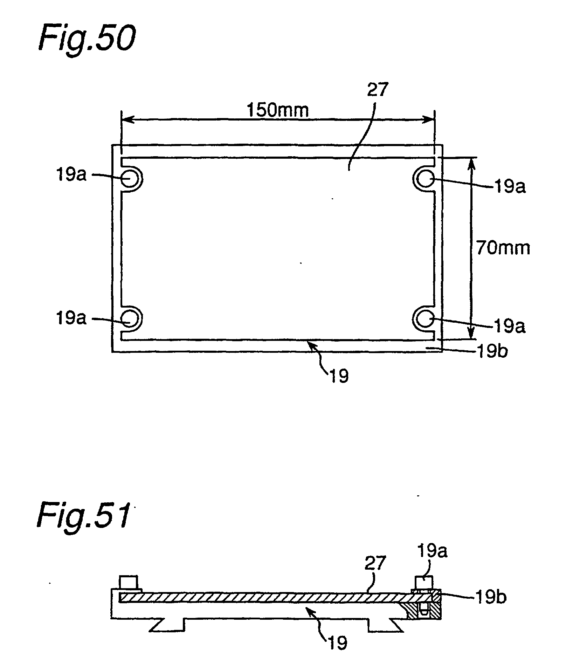

Figs. 1 to 3 are sectional views each showing one of the steps of the method for manufacturing an in-mold decorated article using an in-mold decorating sheet according to a first embodiment of the present invention. Fig. 4 is a sectional view showing the in-mold decorated article obtained by the in-mold decorated article manufacturing method according to the first embodiment. Fig. 5 is a sectional view showing the in-mold decorating sheet according to the first embodiment of the present invention. Fig. 6 is a sectional view showing an in-mold decorating sheet according to the first embodiment of the present invention. Fig. 7 is a sectional view showing an in-mold decorating sheet according to the first embodiment of the present invention. Fig. 8 is a sectional view showing an in-mold decorating sheet according to the first embodiment of the present invention. Fig. 9 is a sectional view showing a three-dimensionally worked in-mold decorating sheet to be used for the in-mold decorated article manufacturing method according to the first embodiment of the present invention. Fig. 10 is a sectional view showing one of the steps of the method for manufacturing an in-mold decorated article according to the first embodiment of the present invention. Fig. 11 is a sectional view showing one of the steps of the method for manufacturing an in-mold decorated article according to the first embodiment of the present invention. Fig. 12 is a perspective view showing a tensile tester for measuring a tensile strength of an in-mold decorating sheet. Fig. 13 is a plan view showing a portion for fixing a test specimen in the tensile tester. Fig. 14 is a sectional view showing a portion for fixing a test specimen in the tensile tester. Fig. 15 is a view showing a pencil scratching tester for measuring pencil hardness of a substrate film (substrate sheet) on its one surface opposite to the surface on which the substrate film is bonded to molding resin. Fig. 16 is a view showing integrating sphere type light transmittance measuring equipment to be used for determining a haze value of the substrate film (substrate sheet). Fig. 50 is a side view of a portion for fixing a test specimen in the pencil scratching tester of Fig. 15. Fig. 51 is a plan view of a portion for fixing a test specimen in the pencil scratching tester of Fig. 15.

In the figures, 1 denotes a substrate film (substrate sheet), 1a a low-crystalline polypropylene film, 1b a low-crystalline or noncrystalline polypropylene film, 1c a high-crystalline propylene film, 2 a pattern layer, 3 an in-mold decorating sheet, 4 a movable die of an injection mold, 5 a stationary die of the injection mold to which the movable die 4 is clamped, 6 cavity-forming surfaces of the movable die 4 and the stationary die 5, 7 a clamp member for positioning and clamping the in-mold decorating sheet 3 to the movable die 4, 8 a gate portion of the stationary die 5, 9 vacuum suction holes formed in the movable die 4 and serving for vacuum-sucking the in-mold decorating sheet 3, which has been positioned to the movable die 4 by the clamp member 7, along the inner surface of the cavity of the movable die 4, 10 molding resin, 11 a cavity formed by the movable die 4 and the stationary die 5, 12 a resin-molded article, 13 a test specimen, 14 screws, 15 an upper chuck, 16 a lower chuck, 17 a movable member, 18 a pencil, 19 a test specimen mount, 20 a weight, 21 a test specimen, 22 a standard white plate, 23 a light trap, 24 a light source, 25 an integrating sphere, and 26 a light receiver.

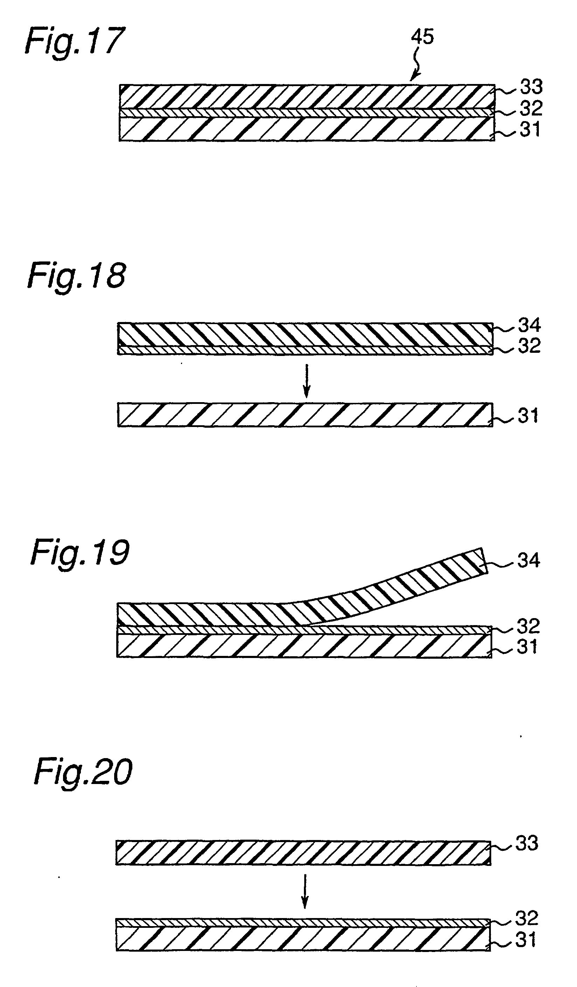

The in-mold decorating sheet 3 (45 in Fig. 17) according to the first embodiment of the present invention is an in-mold decorating sheet 3 which includes a substrate film (substrate sheet) 1 (31 in Fig. 17) and a pattern layer 2 (32 in Fig. 17), and which is used in a method for manufacturing an in-mold decorated article, the method comprising: after working the in-mold decorating sheet 3 into a three-dimensional configuration as shown in Fig. 9, removing portions thereof unnecessary for decoration through trimming process; then setting the in-mold decorating sheet 3 into the movable die 4 for injection molding as shown in Fig. 10; after clamping the mold, injecting the molding resin 10, cooling and setting the injected molding resin 10 as shown in Fig. 11, thereby integrally bonding entirety or part of the in-mold decorating sheet 3 to a surface of the molding resin 10. The in-mold decorating sheet 3 (45 in Fig. 17) is made up so as to include at least a pattern layer 2 (32 in Fig. 17), a substrate film (substrate sheet) 1 (31 in Fig. 17) having the pattern layer 2 (32 in Fig. 17), and a backing sheet (33 in Fig. 17). Further, the in-mold decorating sheet 3 has characteristic values shown at the following (1) - (3):

(1) As shown in Figs. 12 to 14, when a tensile test is carried out with a 10 mm wide test specimen 13 of the in-mold decorating sheet 3, 45 fixed between a pair of chucks 15, 16 at a chuck-to-chuck distance of 5 mm, by applying a load at a constant rate of 500 mm/min to one end of the test specimen 13 under an ambient temperature condition of 62 - 94°C, the test specimen 13 exhibits a tensile load at break of not less than 0.226 N (23 gf).

(2) As shown in Figs. 12 to 14, when a tensile test is carried out with a 10 mm wide test specimen 13 of the in-mold decorating sheet 3 fixed between a pair of chucks 15, 16 at a chuck-to-chuck distance of 5 mm, by applying a load at a constant rate of 500 mm/min to one end of the test specimen 13 under an ambient temperature condition of 25°C, a product of Young's modulus and a cube of the thickness of the in-mold decorating sheet 3 measured at the tensile test is not less than 9.8 Nmm (1 kgfmm).

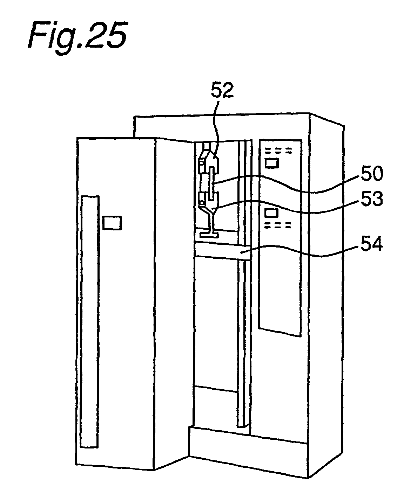

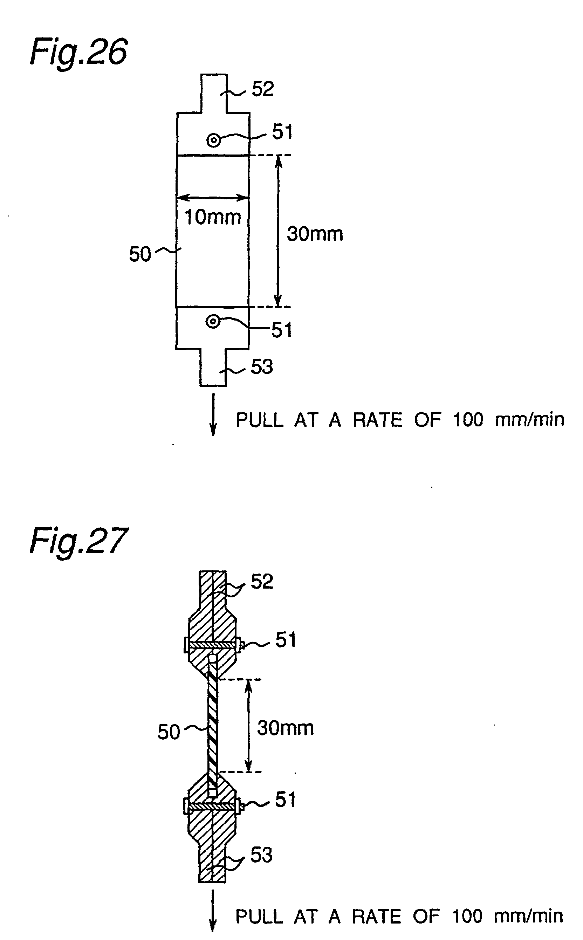

(3) The in-mold decorating sheet 3 changes in properties due to heat within a temperature range of 40 - 200°C; and as shown in Figs. 25 to 27, when a tensile test is carried out with a 10 mm wide test specimen 50 of the in-mold decorating sheet 45 fixed between a pair of chucks 52, 53 at a chuck-to-chuck distance of 5 mm, by applying a load of 0.196 N (20 gf) at a constant rate of 500 mm/min to one end of the test specimen 50 under an ambient temperature condition within a range from the above temperature of property change to a temperature at which the in-mold decorating sheet 3 is thermally decomposed, the test specimen 50 exhibits a tensile elongation at break of not less than 130%.

The present inventor has discussed conditions under which the in-mold decorating sheet does not break in molding process with respect to the foregoing first issue of the prior art. As a result, it is found out that the above characteristics (1) - (3) are necessary.

As a feature for the in-mold decorating sheet not to break in molding process, as has been described as characteristic (1), as shown in Figs. 12 to 14, it was found that when a tensile test is carried out with a 10 mm wide test specimen 13 of the in-mold decorating sheet 3 fixed between a pair of chucks 15, 16 at a chuck-to-chuck distance of 5 mm, by applying a load at a constant rate of 500 mm/min to one end of the test specimen 13 under an ambient temperature condition of 62 - 94°C, the test specimen 13 needs to exhibit a tensile load at break of not less than 0,226 N (23 gf).

The reason why the in-mold decorating sheet 3 breaks in molding process is that when heat of the molding resin 10 is applied to the in-mold decorating sheet 3 so that the in-mold decorating sheet 3 is stretched along the flow of the molding resin 10, the in-mold decorating sheet 3 does not have enough strength to withstand against this.

The injection temperature of the molding resin 10, in most cases, is 150 - 280°C. Therefore, first, in a case where (I) ethylene-vinyl acetate resin moldable at 150°C is injection-molded at the temperature, an in-mold decorating process was carried out with various types of in-mold decorating sheets, and the in-mold decorating sheets 3 were classified into those which broke during the molding process and those which did not break. Also, in another case where (II) polycarbonate resin moldable at 280°C is injection-molded at the temperature, a similar in-mold decorating process was carried out, and the in-mold decorating sheets 3 were classified into those which broke during the molding process and those which did not break. It is noted that as a result of measuring the temperatures of the surfaces of the in-mold decorating sheets during the molding process, the temperature was around 62°C in the case of (I) and around 94°C in the case of (II) due to the transfer of heat of the injection molding resin.

Therefore, the reason why the temperature range was set to 62 - 94°C is that because the optimum injection temperature for most molding resins used for injection-molding is 150 - 280°C as described above, the in-mold decorating sheet is required to have such a strength as not to break even if the surface temperature of the in-mold decorating sheet is increased to 280°C due to transfer of heat of the resin to the in-mold decorating sheet. Further, some molding resins have optimum injection temperatures of higher than 280°C, and using such a resin would cause the in-mold decorating sheet to deteriorate however the material is improved. Also, other molding resins have an optimum injection temperature of lower than 150 °C, and using such a resin would cause the resulting in-mold decorated article to be insufficient in heat resistance performance.

Next, for each of the classified in-mold decorating sheets, a tensile test was carried out with a 10 mm wide test specimen 13 of the in-mold decorating sheet fixed between a pair of chucks 15, 16 at a chuck-to-chuck distance of 5 mm, by applying a load at a constant rate of 500 mm/min to one end of the test specimen 13 under an ambient temperature condition of 62°C in compliance with the measurement method defined in JIS K7127-1989 (see Figs. 12 to 14). As a result, test specimens of all of in-mold decorating sheets that had the same characteristics as those of the characteristic (1) and that broke in the in-mold decorating process exhibited tensile loads at break of less than 0.196 N (20 gf). Also, as a result of a similar tensile test carried out under an ambient temperature condition of 94°C (see Figs. 12 to 14), test specimens of all of in-mold decorating sheets that had the same characteristics as those of the characteristic (2) and that broke in the in-mold decorating process exhibited tensile loads at break of less than 0.226 N (23 gf). Therefore, it is found that the in-mold decorating sheet is required to have a strength of at least 0.226 N (23 gf) or more tensile load at break in order to be prevented from breaking in molding process.

It is noted here that the terms "ambient temperature" refer to a temperature of a test specimen in which the test specimen has been heated to the same temperature as that of the atmosphere of the test specimen.

The test specimen 13 is obtained by cutting an in-mold decorating sheet into a width of 10 mm and into such a size as can be provided for a tensile test using a pair of chucks 15, 16 at a chuck-to-chuck distance of 5 mm. The reason why the test specimen 13 is not large-sized is to prevent the test specimen 13 from softening and wrinkling all over under the above ambient temperatures before pulling the test specimen 13. Besides, making the test specimen 13 into an excessively small size would cause measurement errors to increase. From these reasons, the test specimen 13 was made into as small a size as possible so that the measurement error is negligible, and then, the above size of the test specimen 13 was obtained. Referring to Figs. 12 to 14, the upper chuck 15 is fixed by a screw 14 while pinching an upper end of the test specimen 13. Also, the lower chuck 16 is fixed by a screw 14 while pinching a lower end of the test specimen 13. As shown in Figs. 12 to 14, while the upper chuck 15 is fixed to the tester, the lower chuck 16 is lowered at a rate of 500 mm/min downward by the movable member 17, causing a tensile force to act on the test specimen 13.

Further, the rate of 500 mm/min, at which the test specimen 13 is pulled, has been selected as one that is the fastest within the measurable range for general tensile testers due to the fact that the rate at which the in-mold decorating sheet is stretched in actual three-dimensional working and injection molding process is so fast that only a few types of equipment is capable of measurement with repeatability. Although even this rate is slower than rates at which the in-mold decorating sheet is stretched during the working, yet measurement data actually do not change so much even when the setting of the pulling rate is changed, hence allowing enough simulation to be done.

Also, since molding dies other than the injection molding dies are used in the three-dimensional working process as shown in the characteristic (2), there arises a need for a step of inserting the in-mold decorating sheet 3 into the injection molding dies 4, 5. As a result, the in-mold decorating sheet 3 is required to have a rigidity.

This rigidity is proportional to Young's modulus of the in-mold decorating sheet 3 at an ambient temperature of 25°C and a cube of its thickness. For the in-mold decorating sheet 3 in this first embodiment of the present invention, the Young's modulus is defined by an initial modulus of elongation resulting when the above-described tensile test is performed with the width of the test specimen 13, the distance between the chucks 15, 16, and the rate as described above (that is, an initial modulus of elongation resulting when a tensile test is performed with a 10 mm wide test specimen 13 of the in-mold decorating sheet fixed between a pair of chucks 15, 16 at a chuck-to-chuck distance of 5 mm, by applying a load at a constant rate of 500 mm/min to one end of the test specimen 13 under an ambient temperature condition of 25°C by a measuring method complying with the measuring method of JIS K7127-1989 as shown in Figs. 12 to 14). As a result of performing detailed tests (see the following Table 1), it was found that unless the product of Young's modulus of the in-mold decorating sheet and the cube of its thickness is at least 9.8 Nmm (1 kgfmm) or more, it is impossible to punch the in-mold decorating sheet or to fulfill the mold inserting work. For more efficient work, it is necessary that the product of Young's modulus of the in-mold decorating sheet 3 and the cube of its thickness be 49 Nmm$^2$ (5 kgfmm$^2$) or more.

Table 1

| Substrate sheet | Backing sheet | Young's modulus of in-mold decorating sheet | Thickness of in-mold decorating sheet | Product of Young's modulus and cube of thickness of in-mold decorating sheet at an ambient temperature of 25°C | Insertability |
|---|---|---|---|---|---|
| Acrylic, 0.05 mm | Polypropylene 0.18 mm | 785 N/ mm$^2$ (80 kgf/mm$^2$) | 0.23 mm | 9.5 Nmm (0.97 kgfmm) | × |
| Acrylic, 0.05 mm | Polypropylene 0.19 mm | 785 N/ mm$^2$ (80 kgf/mm$^2$) | 0.24 mm | 10.9 Nmm (1.11 kgfmm) | Δ |
| Acrylic, 0.05 mm | Polypropylene 0.30 mm | 785 N/ mm$^2$ (80 kgf/mm$^2$) | 0.35 mm | 34 Nmm (3.43 kgfmm) | Δ |
| Acrylic, 0.05 mm | Polypropylene 0.35 mm | 785 N/ mm$^2$ (80 kgf/mm$^2$) | 0.40 mm | 50 Nmm (5.12 kgfmm) | ○ - ◎ |
| Acrylic, 0.05 mm | Polypropylene 0.45 mm | 785 N/ mm$^2$ (80 kgf/mm$^2$) | 0.50 mm | 98 Nmm (10.0 kgfmm) | ◎ |
| Acrylic, 0.07 mm | ABS 0.12 mm | 1373 N/ mm$^2$ (140 kgf/mm$^2$) | 0.19 mm | 9.4 Nmm (0.96 kgfmm) | × |

Table 1 (continued)

| Substrate sheet | Backing sheet | Young's modulus of in-mold decorating sheet | Thickness of in-mold decorating sheet | Product of Young's modulus and cube of thickness of in-mold decorating sheet at an ambient temperature of 25°C | Insertability |
|---|---|---|---|---|---|
| Acrylic, 0.07 mm | ABS 0.13 mm | 1373 N/ mm$^2$ (140 kgf/mm$^2$) | 0.20 mm | 11 Nmm (1.12 kgfmm) | △ |
| Acrylic, 0.07 mm | ABS 0.28 mm | 1373 N/ mm$^2$ (140 kgf/mm$^2$) | 0.35 mm | 37 Nmm (3.78 kgfmm) | △ |
| Acrylic, 0.07 mm | ABS 0.33 mm | 1373 N/ mm$^2$ (140 kgf/mm$^2$) | 0.40 mm | 88 Nmm (8.96 kgfmm) | ◎ |
| Acrylic, 0.07 mm | Polycarbonate 0.1 mm | 1765 N/ mm$^2$ (180 kgf/mm$^2$) | 0.17 mm | 8.6 Nmm (0.88 kgfmm) | × |
| Polycarbonate, 0.07 mm | Polycarbonate 0.1 mm | 2059 N/ mm$^2$ (210 kgf/mm$^2$) | 0.17 mm | 10.1 Nmm (1.03 kgfmm) | △ |
| Acrylic, 0.07 mm | Polycarbonate 0.11 mm | 1765 N/ mm$^2$ (180 kgf/mm$^2$) | 0.18 mm | 10.3 Nmm (1.05 kgfmm) | △ |
| Polycarbonate, 0.07 mm | Polycarbonate 0.09 mm | 2059 N/ mm$^2$ (210 kgf/mm$^2$) | 0.16 mm | 8.4 Nmm (0.86 kgfmm) | × |

It was also found that, as shown in the characteristic (3), when a tensile test is performed according to the measuring method of JIS K7127-1989, the temperature at which the in-mold decorating sheet is changed in properties due to heat is within a range of 40 - 200°C, and that when as shown in Figs. 25-27, a tensile test is carried out with a 10 mm wide test specimen 50 of the in-mold decorating sheet fixed between a pair of chucks 52, 53 at a chuck-to-chuck distance of 5 mm, by applying a load of 0.196 N (20 gf) at a constant rate of 500 mm/min to one end of the test specimen 50 under an ambient temperature condition within a range from the above temperature of property change to a temperature at which the in-mold decorating sheet is thermally decomposed, the test specimen 50 is required to exhibit a tensile elongation at break of not less than 130%. In Figs. 25 to 27, the upper chuck 52 is fixed by a screw 51 while pinching an upper end of the test specimen 50. Also, the lower chuck 53 is fixed by a screw 51 while pinching a lower end of the test specimen 50. As shown in Figs. 25 to 27, while the upper chuck 15 is fixed to the tester, the lower chuck 53 is lowered at a rate of 500 mm/min downward by a movable member 54, causing a tensile force to act on the test specimen 50.

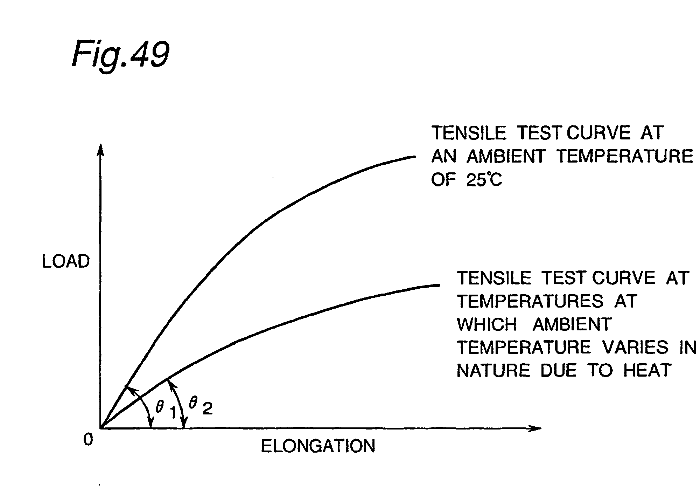

The temperature at which properties change due to heat herein refers to a temperature at which Young's modulus at the temperature becomes 80% or lower of Young's modulus that is exhibited under an ambient temperature of 25°C (see Fig. 49). It is noted that $\theta_1$ is the gradient at the ambient temperature of 25°C and $\theta_2$ is the gradient at the temperature at which property change due to heat of the ambient temperature, where (80% angle of $\theta_1$) $\geq \theta_2$.

In order to allow an easy three-dimensional working of the in-mold decorating sheet, it is necessary that the in-mold decorating sheet be softened at a certain temperature or higher, and that when loaded under a temperature higher than the certain temperature, the in-mold decorating sheet stretch without breaking. Therefore, the temperature range of property change due to heat is defined as 40 - 200°C.

The reason of this is that (I) with a material falling within a temperature range below 40°C, the in-mold decorating sheet is less resistant to heat so that the in-mold decorating sheet may peel from the decorated article due to temperature rises in the summer; and that (II) with a material that is not thermally deformed even at 200°C, the in-mold decorating sheet takes too much time to process for three-dimensional working.

A further optimal temperature range for property change due to heat varies depending on the purpose of use. For example, for household electrical appliances such as refrigerators and air conditioners, because of their large product size and importance of three-dimensional workability, materials showing property change at temperatures of 40 - 160°C are preferably chosen. For applications to interior automotive trims, in which high heat resistance and deep three-dimensional workability are required, materials showing property change at temperatures of 60 - 150°C are preferably chosen.

The whole thickness of the in-mold decorating sheet 3, 45 is, preferably, within a range of 50 - 2000 μm. With the whole thickness over 2000 μm, the in-mold decorating sheet is inferior in moldability, so that the in-mold decorating sheet takes too much time to work into a three-dimensional configuration. With the whole thickness below 50 μm, there occur such molding failures as wrinkles to the in-mold decorating sheet during the molding integration. Also, with a working sequence which includes: three-dimensionally working the in-mold decorating sheet, thereafter removing portions of the in-mold decorating sheet unnecessary for decorating by trimming, and then setting the resultant in-mold decorating sheet into an injection mold, most of in-mold decorating sheets each having a whole thickness of less than 250 μm would not satisfy the condition shown in the characteristic (2).

More preferably, the thickness is within a range of 250 - 700 μm. This is because thickness beyond 700 μm would make it difficult to put the in-mold decorating sheet into a rolled state, and make it impossible to continuously feed and process the in-mold decorating sheet.

As the above description is based on the assumption that three-dimensional working is carried out within the movable die of the injection mold, there is a sequence, in the manufacturing process, which includes: setting of the in-mold decorating sheet into the injection mold and processing for three-dimensional working, and after molding and integration, trimming the in-mold decorating sheet. In this case, because there is no step for inserting the trimmed in-mold decorating sheet into the mold, it is not necessarily required for the sheet to have the rigidity, where the condition (2) becomes unnecessary.

As the method for lamination of individual sheets for the in-mold decorating sheet, heat lamination method, dry lamination method, and the like are available.

As required, an adhesion layer may preparatorily be formed on one surface of the backing sheet to be integrally bonded to the molding resin. Without the adhesion layer, the backing sheet layer basically serves as an adhesion layer, but the presence of an adhesion layer allows a firmer bonding to the molding resin to be attained. When the adhesion layer is formed, polyvinyl chloride - vinyl acetate copolymer resins, acrylic resins, urethane resins, or the like may appropriately be used.

Next, the method for manufacturing a resin molded article decorated with an in-mold decorating sheet is described.

First, the in-mold decorating sheet 3 is set by the clamp member 7 to the surface of the movable die 4, which is an injection mold.

A concrete example of the way of setting to the movable die 4 is as follows. A longer in-mold decorating sheet 3 is once wound up on a roll shaft so as to be formed into a roll state, and the resulting roll is placed at an upper portion of the movable die 4 for injection molding so as to be movable integrally with the movable die 4. Then the in-mold decorating sheet 3, while being wound out from the roll, is passed through between the retracted movable die 4 and the stationary die 5 so as to be wound up by a roll shaft of a film winding means which is set at a lower portion of the injection-molding movable die 4 so as to be movable integrally with the movable die 4. As another example, a leaf-like in-mold decorating sheet 3 may be set to the surface of the movable die 4 by robot or human hand (see Fig. 1). For the setting of the in-mold decorating sheet 3 onto the surface of the movable die 4, after the in-mold decorating sheet 3 is placed on the surface of the movable die 4, the position of the in-mold decorating sheet 3 relative to the surface of the movable die 4 is determined by a positioning sensor or the like, and the in-mold decorating sheet 3 may be pressed by the clamp member 7 to the surface of the injection-molding movable die 4.

Subsequently, the in-mold decorating sheet 3 is set to the surface of the injection-molding movable die 4, and thereafter with the use of the vacuum suction holes 9 formed in the injection-molding movable die 4, the in-mold decorating sheet 3 is vacuum-sucked along a recessed portion of the movable die 4 having the cavity-forming surface 6, by which the in-mold decorating sheet 3 is worked into a three-dimensional configuration along the recessed portion of the injection-molding movable die 4 (see Fig. 2). A concrete example is a method which includes steps of heating and thereby softening the in-mold decorating sheet 3 set to the surface of the movable die 4 by a heating plate or the like inserted between the movable die 4 and the stationary die 5, closing the space between the recessed portion of the injection-molding movable die 4 and the in-mold decorating sheet 3, and performing evacuation and vacuum suction through the vacuum suction holes 9 so that the in-mold decorating sheet 3 is put into close contact with the recessed portion of the injection-molding movable die 4. In the process of working into a three-dimensional configuration, or in the process of pressing and clamping of the in-mold decorating sheet 3 by the clamp member 7, the trimming process of the unnecessary portions of the in-mold decorating sheet 3 may be done.

Instead of this method, before the in-mold decorating sheet 3 is set to the surface of the injection-molding movable die 4, the in-mold decorating sheet 3 may preparatorily be worked into a desired configuration with a mold for three-dimensional working and molding other than the injection-molding movable die 4 and stationary die 5, and also trimmed into a desired configuration (see Fig. 9), and then the three-dimensionally worked in-mold decorating sheet 3 is fitted into the recessed portion of the injection-molding movable die (see Fig. 10). It is noted here that the three-dimensional working refers to transforming the in-mold decorating sheet 3 from a planar state into a three-dimensional configuration. An example of the desired configuration is a configuration coincident with the cavity-forming surface 6 of the injection-molding movable die 4 or stationary die 5. As the method for three-dimensional working, there are vacuum molding method, air-pressure forming method, pressing method in which heated rubber is pressed, press molding method, and the like. As the method for trimming into a desired configuration, there are Thomson punching method, pressing method with dies, and the like. Examples of the punching configuration are a line extending along the perimeter of a specified configuration, a hole of a specified configuration, and the like. In addition, trimming process may be done concurrently with the process of working into a three-dimensional configuration.

Next, with the movable die 4 clamped to the stationary die 5, the molding resin 10 in molten state is injected from the gate portion 8 of the stationary die into the cavity 11 (see Figs. 3 and 11), and the molding resin 10 is solidified so that the resin molded article 12 is molded within the cavity 11 while the in-mold decorating sheet 3 is bonded integrally to the surface of the resin molded article 12 concurrently.

Thereafter, the resin molded article 12 is taken out from the movable die 4, and then unnecessary portions of the in-mold decorating sheet 3 bonded to the resin molded article 12 are removed (see Fig. 4). In the case where the in-mold decorating sheet 3 has preparatorily been trimmed into a desired configuration as described above, the step of removing the unnecessary portions of the in-mold decorating sheet 3 is unnecessary.

The movable die 4 and the stationary die 5 as the injection mold are not particularly limited to the above embodiment. It is appropriate to use a mold which is made up of a movable die 4 and a stationary die 5 having a gate portion 8 for injecting the molding resin 10, where when the stationary die 5 and the movable die 4 are closed, a singularity or plurality of cavities 11 surrounded by the cavity-forming surfaces 6 of the stationary die 5 and the movable die 4 are formed. The in-mold decorating sheet 3 set within the cavities 11 formed by the movable die 4 and the stationary die 5 for injection molding covers the cavity-forming surfaces 6. The recessed portion having a cavity-forming surface 6 may be formed in either the stationary die 5 or the movable die 4. A clamp member 7 for pressing and fixing the in-mold decorating sheet 3 around the recessed portion of the movable die 4 or the stationary die 5 may be provided.

(Second Embodiment)

Next, a second embodiment of the present invention is described. This second embodiment is intended to solve a second issue, i.e., prevention of damage.

As the second issue, there has been an issue that the outermost surface of the in-mold decorating sheet in the in-mold decorated article, i.e., the substrate sheet surface, may be easily damaged. It has been found that, for example, with polybutadiene resin or the like used as the material of the substrate sheet of the in-mold decorating sheet, although an in-mold decorated article is obtained in manufacturing process, there is a high possibility that this article, when used as a component for assembly and working, would result in a defective product in terms of the substrate sheet surface due to claw marks caused by the assembling worker.

With respect to the second issue, the present inventor discussed what level of surface hardness is required in order to prevent high rates of defective products due to the assembling worker's claw traces being impressed on the substrate sheet surface.

As a result, it was found out that the in-mold decorating sheet should have a pencil hardness value of 3B - 2H as measured from a surface of the in-mold decorating sheet opposite to its surface to be bonded to the molding resin. That is, substrate sheets the surface hardness of which does not reach the pencil hardness values of 3B, more specifically, in-mold decorating sheets made of polybutadiene film, were unusable.

Conversely, substrate sheets the surface hardness of which is beyond the pencil hardness value of 2H, more specifically, in-mold decorating sheets made of UV-curing type urethane film, were evaluated. As a result, these in-mold decorating sheets, although processible for three-dimensional working and in-mold processing, were unusable, in terms of design, due to occurrence of numberless microcracks on the surface.

However, in the case where after the three-dimensional working and the in-mold processing are done, substrate sheets are coated with high-hardness UV-curing type urethane resin, there occurs no problem. In this case, substrate sheets are evaluated before their surfaces are coated.

The surface hardness measuring method is a method for determining the surface hardness from the presence or absence of scratch by scratching with a pencil the surface of a test specimen 27, which has been cut to a 150 mm x 70 mm size, with a coating-dedicated pencil scratching tester (see Figs. 15, 50, 51) complying with JIS K 5401-1969, where the pencil hardness value is a pencil hardness obtained when the times the surface is scratched is less than two times out of five times of tests. The scratching is done by pressing a pencil 18 against the test specimen 27 with a weight 20 at 45 ± 1 degrees, and in this state, moving the test specimen mount 19. In Figs. 50 and 51, reference numeral 19a denotes studs for fitting the test specimen 27 to the test specimen mount 19, and 19b denotes a test specimen stopper bar.

As a result, in-mold decorating sheets showing pencil hardness values of 3B or higher were almost no damaged even by human's assembling work with the claws acute.

As a result of the test, it was found that in-mold decorating sheets having the above characteristic can be obtained by selecting, as the substrate sheet, undrawn or lightly-drawn polyethylene terephthalate film, noncrystalline or low-crystalline polyester copolymer film, acrylic film, polycarbonate film, polypropylene film, polybutylene terephthalate film, polystyrene film, polyurethane film, acrylonitrile butadiene-styrene copolymer film, nylon film, polyvinyl chloride film, fluoric film, cellulose acetate film, or the like.

Among others, acrylic film proved to be exceedingly superior in transparency and weatherability in addition to the above characteristic, hence a film having high added value as a substrate sheet in terms of the clarity improvement of the pattern design as well as the protective function of the pattern layer.

Further, for films that can be controlled in the degree of crystallinity such as polyethylene terephthalate film and polypropylene film, it is advisable to adjust the degree of crystallinity so that the hardness becomes 3B or higher.

However, even if the hardness falls within the above range, market complaints may occur in cases where the in-mold decorated article according to the second embodiment of the present invention is mounted in applications involving repeated hand contact by consumers.

As a countermeasure therefor, preferably, materials having a pencil hardness value of B - 2H are selected for interior automotive trims, and materials having a pencil hardness value of HB - 2H are selected for electrical appliances.

(Third Embodiment)

Next, a third embodiment of the present invention is described. This third embodiment is intended to solve a third issue, i.e., prevention of visibility of trimmed cross-section lines.

As the third issue, it can occur that cut end faces due to trimming of the in-mold decorating sheet to be integrated with the molding resin are not buried in the molding resin but exposed, resulting in an in-mold decorating sheet poor in design. That is, there has been an issue that if a cut end face of the in-mold decorating sheet is exposed on the surface of the in-mold decorated article, boundary lines between the in-mold decorating sheet and its peripheral molding resin surface become noticeable, resulting in an in-mold decorating sheet which is so poor in design as to make it apparent that the in-mold decorating sheet is in-mold-decorated.

With respect to this third issue, the in-mold decorating sheet according to the third embodiment of the present invention is so constituted that the thickness of the in-mold decorating sheet excluding the thickness of the backing sheet is not more than 200 μm and that the color of the backing sheet is a dark color falling within the following ranges in the CIE1976(L*a*b*) color system:

$$9 \leq L^* \leq 75$$

$$-40 \leq a^* \leq 40$$

$$-60 \leq b^* \leq 30$$

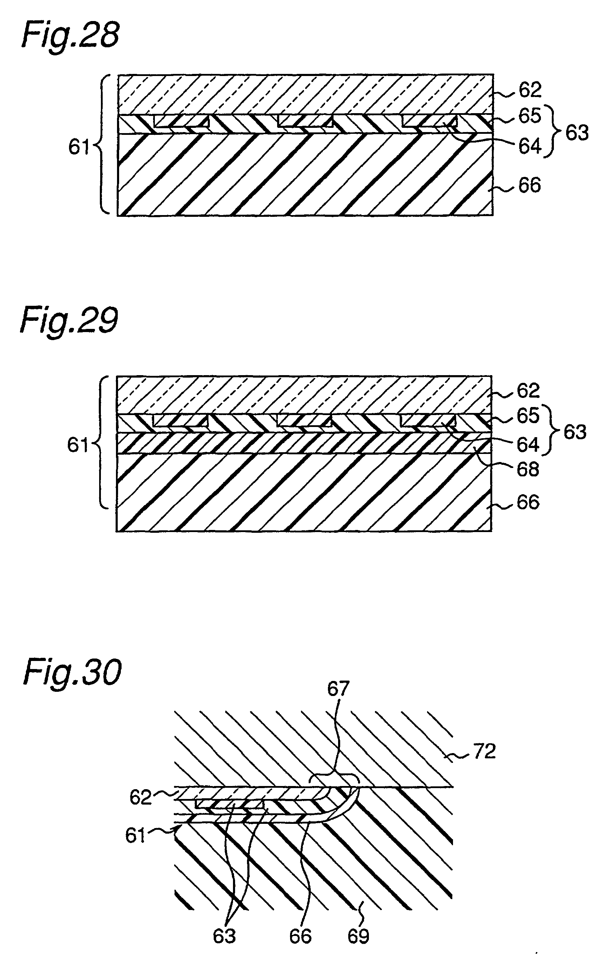

More specifically, in the third embodiment, as shown in Figs. 28 and 29, the thickness of the in-mold decorating sheet 61 excluding the thickness of a backing sheet 66 is not more than 200 μm, and the color of the backing sheet 66 is a dark color falling within the following ranges in the CIE1976L*a*b* color system:

$$9 \leq L^* \leq 75$$

$$-40 \leq a^* \leq 40$$

$$-60 \leq b^* \leq 30$$

The reason why the color of the backing sheet 66 is limited like this is as follows.

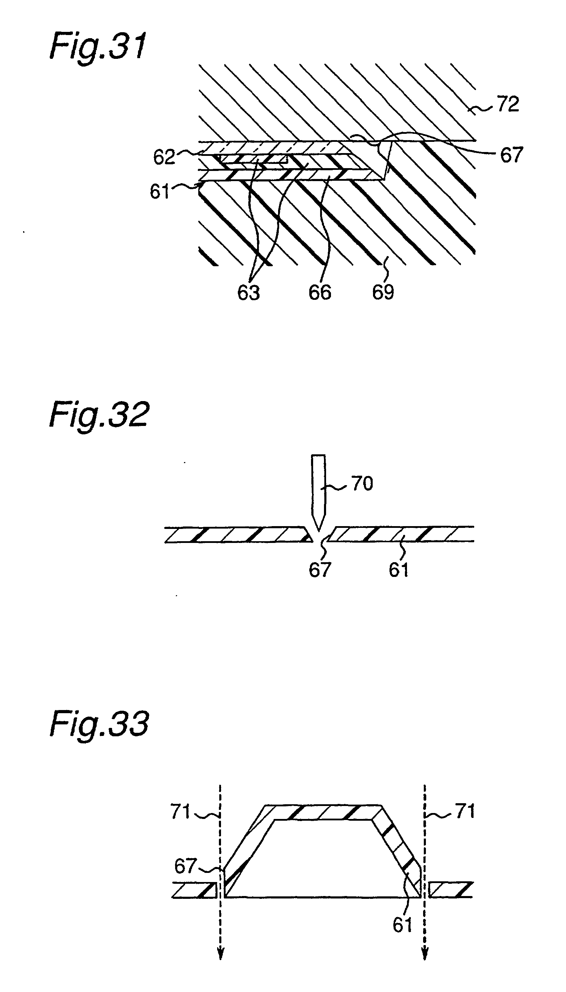

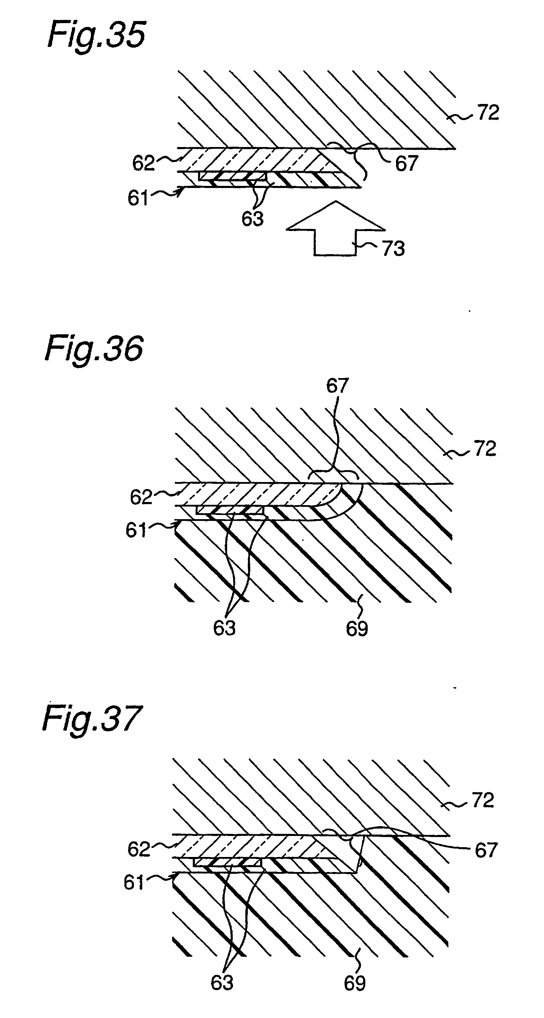

In the trimming process using a die press having a sharp blade 70, the in-mold decorating sheet 61 is not cut fully perpendicularly to the surface thereof, and a cut end face 67 of the in-mold decorating sheet 61 is angled to front-and-rear surfaces of the in-mold decorating sheet 61 (see Fig. 32). Also in the case where trimming process by laser cutting is performed, if the in-mold decorating sheet 61 has been three-dimensionally worked into a drawing configuration by preforming process before the trimming, then a laser beam 71 is irradiated in a constant direction so that the cut end face 67 is angled to the front-and-rear surfaces of the in-mold decorating sheet 61 (see Fig. 33). In the case where molding resin is injected into a mold 72 in the state that a space is formed between the inner wall of the mold 72 along which the in-mold decorating sheet 61 is set and the cut end face 67 of the in-mold decorating sheet 61 angled to this inner wall (see Fig. 35), it may occur that the cut end face 67 of the in-mold decorating sheet 61 is pressed against the inner wall of the mold 72 by pressure 73 of the molding resin (see Fig. 36), or that molding resin 69 does not enter into the space (see Fig. 37).

Generally, the molding resin 69 to be used for interior automotive trims, in many cases, are in black or other similar colors. As a result, most of light is absorbed at the surface where the molding resin 69 is exposed, resulting in less reflection. In contrast to this, the in-mold decorating sheet 61 has the cut end face 67 formed rough by cutting process, causing the light to be scattered, with the result that the in-mold decorating sheet 61 is poor in visual transparency as its rear is viewed from the cut end face 67. Also, a cut end face 67 of a second pattern layer 68, which is similar in color to the cut end face 67 of a pattern layer 63 or the ground of the pattern layer 63, is brighter than the molding resin. As a result, in comparison with the surface where the molding resin is exposed, reflected light (or color) of the whole cut end face of the in-mold decorating sheet 61 alone is conspicuous.

Therefore, in order that the reflected light (or color) of the whole cut end face 67 of the in-mold decorating sheet 61 becomes inconspicuous, the backing sheet layer 66 of the in-mold decorating sheet 61 is provided in black or some other similar color, and moreover the layers other than the backing sheet 66 (i.e., layers including a transparent resin film 62 serving as a substrate film, and the pattern layer 63 having a grain duct layer 64 and a ground layer 65 in Fig. 28; layers including a transparent resin film 62 serving as a substrate film, the pattern layer 63 having a grain conductor layer 64 and a ground layer 65, and a second pattern layer 68 in Fig. 29) are formed so as to have a thickness of less than 200 µm, by which reflection at the whole cut end face 67 of the in-mold decorating sheet 61 is reduced.

With the use of the in-mold decorating sheet 61 having the above constitution, an insert-molded decorated article can be obtained by the following method.

First, an in-mold decorating sheet 61 is fixed to a preforming die having a recessed portion for deep drawing by means of a clamp or the like, and then the in-mold decorating sheet 61 is heated and softened by a heat source and further put into close contact with the surface of the preforming die by vacuum suction effected from the preforming die side. Next, with the vacuum suction released, the in-mold decorating sheet 61 is taken out from the preforming die. Next, unnecessary portions of the in-mold decorating sheet are trimmed, by which a desired three-dimensionally worked in-mold decorating sheet 61 is obtained. Next, the three-dimensionally worked in-mold decorating sheet 61 is inserted into a cavity die having a recessed portion for deep drawing and fixed in the cavity die. Next, the cavity die and the core die of the injection mold 72 are clamped together, thereby forming a closed space between the in-mold decorating sheet 61 and the core die. Molten molding resin 69 is injected into this space (see Figs. 30 and 31), and after allowing the resin to be cooled, the cavity die and the core die are opened, by which a decorated insert-molded article in which the in-mold decorating sheet 61 and the molding resin 69 have been integrated together can be obtained. This decorated insert-molded article has a blackish end face of the reinforcement sheet, i.e. the backing sheet 66, after the trimming of the in-mold decorating sheet 61, and the total thickness of the other laminations is not more than 200 µm. Thus, lines of the cut end face 67 of the in-mold decorating sheet 61, even if exposed, are inconspicuous, and the decorated insert-molded article is preferable in terms of design.

In-mold decorating sheets in which the color of the backing sheet 66 is out of the aforementioned range and in which the thickness of the layers other than the backing sheet 66 is not less than 200 µm were tested with the thickness and color of the backing sheet 66 changed in various ways. Test results show that reflected light (or color) of the whole cut end face of the in-mold decorating sheet is conspicuous as shown in the following Table 2:

Table 2

| Color of backing sheet | | | Thickness of in-mold decorating sheet (µm) | Thickness of backing sheet (µm) | Effect on prevention of visibility of trimming cross-section lines |
|---|---|---|---|---|---|
| L* | a* | b* | | | |
| 40 | 0 | -15 | 250 | 50 | ○ - Δ |
| 9 | -40 | -60 | 250 | 50 | Δ |
| 75 | 40 | 30 | 250 | 50 | Δ |

Table 2   (continued)

| Color of backing sheet | | | Thickness of in-mold decorating sheet (μm) | Thickness of backing sheet (μm) | Effect on prevention of visibility of trimming cross-section lines |
|---|---|---|---|---|---|
| L* | a* | b* | | | |
| 40 | 0 | -15 | 250 | 70 | ◎ |
| 9 | -40 | -60 | 250 | 70 | Δ |
| 75 | 40 | 30 | 250 | 70 | Δ |
| 8 | 0 | -15 | 250 | 70 | × |
| 76 | 0 | -15 | 250 | 70 | × |
| 40 | -41 | -15 | 250 | 70 | × |
| 40 | 41 | -15 | 250 | 70 | × |
| 40 | 0 | -61 | 250 | 70 | × |
| 40 | 0 | 31 | 250 | 70 | × |
| 40 | 0 | -15 | 700 | 500 | ○ |
| 9 | -40 | -60 | 700 | 500 | Δ |
| 75 | 40 | 30 | 700 | 500 | Δ |
| 40 | 0 | -15 | 700 | 550 | ◎ |
| 9 | -40 | -60 | 700 | 550 | ○ - Δ |
| 75 | 40 | 30 | 700 | 550 | ○ - Δ |
| 8 | 0 | -15 | 700 | 550 | × - Δ |
| 76 | 0 | -15 | 700 | 550 | × - Δ |
| 40 | -41 | -15 | 700 | 550 | × - Δ |
| 40 | 41 | -15 | 700 | 550 | × - Δ |
| 40 | 0 | -61 | 700 | 550 | × - Δ |
| 40 | 0 | 31 | 700 | 550 | × - Δ |
| 40 | 0 | -15 | 2000 | 1800 | ◎ |
| 9 | -40 | -60 | 2000 | 1800 | Δ |
| 75 | 40 | 30 | 2000 | 1800 | Δ |
| 40 | 0 | -15 | 2000 | 1850 | ◎ |
| 9 | -40 | -60 | 2000 | 1850 | ○ |
| 75 | 40 | 30 | 2000 | 1850 | ○ |
| 8 | 0 | -15 | 2000 | 1850 | × - Δ |
| 76 | 0 | -15 | 2000 | 1850 | × - Δ |
| 40 | -41 | -15 | 2000 | 1850 | × - Δ |
| 40 | 41 | -15 | 2000 | 1850 | × - Δ |
| 40 | 0 | -61 | 2000 | 1850 | × - Δ |
| 40 | 0 | 31 | 2000 | 1850 | × - Δ |

(2) The material of the backing sheet 66 should be one which, when formed into the in-mold decorating sheet 61, satisfies conditions that the in-mold decorating sheet 61 has the characteristics (1) - (3), that the pencil hardness value as measured from one surface of the in-mold decorating sheet 61 opposite to the surface to be bonded to the molding resin is 3B - 2H, and that the substrate sheet 62 is selected from among undrawn or lightly-drawn polyethylene terephthalate film, noncrystalline or low-crystalline polyester copolymer film, acrylic film, polycarbonate film, polypropylene film, polybutylene terephthalate film, polystyrene film, polyurethane film, acrylonitrile butadiene-styrene copolymer film, nylon film, polyvinyl chloride film, fluoric film, or cellulose acetate film.

Such a material for the backing sheet 66 is exemplified by undrawn or lightly-drawn polyethylene terephthalate film, noncrystalline or low-crystalline polyester copolymer film, polypropylene film, polyethylene film, polystyrene film, fluoric film, polybutylene terephthalate film, methacryl-styrene copolymer film, acrylonitrile butadiene-styrene copolymer film, polycarbonate film, polyurethane film, nylon film, polyvinyl chloride film, nitrocellulose film, or the like.

However, in the case where the substrate sheet 62 is made of an easily vaporizable, foamable material, there may arise an issue that the in-mold decorating sheet 61 has an orange-peel surface even if the backing sheet 66 is made of the above material. This issue and its solving means are described below.

(Fourth Embodiment)

Next, a fourth embodiment of the present invention is described. This fourth embodiment is intended to solve a fourth issue, i.e., prevention of occurrence of an orange-peel state.

As the fourth issue, there has been a tendency that in the process of forming a desired configuration by vacuum molding, moisture content in the sheet material vaporizes and foams due to heat during the vacuum molding so that the surface of the in-mold decorating sheet appears an orange peel state, resulting in impaired design and hence a defective article.

In such a case, vaporizable/foamable components contained in the backing sheet material are often the cause of acceleration toward the generation of the orange-peel surface. Therefore, it is preferable to select a material having a lower content of such components (anti-vaporization/foaming material).

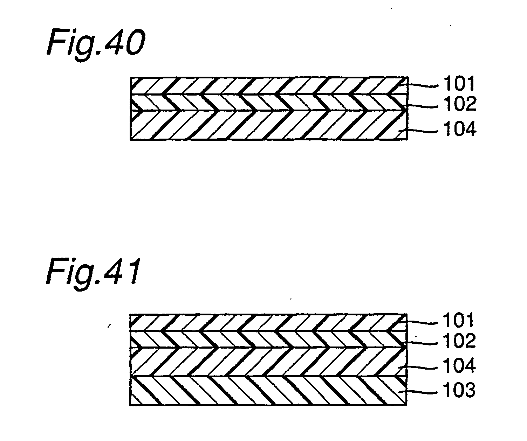

That is, with respect to the fourth issue, the in-mold decorating sheet according to the fourth embodiment of the present invention is so constituted that the backing sheet is made of a material which prevents vaporization and foaming. More specifically, as shown in Figs. 40 and 41, the backing sheet 104 is made of a material which prevents vaporization and foaming. It is noted that reference numeral 101 denotes a substrate sheet, 102 denotes a pattern layer, and 103 denotes an ABS film for reinforcing the adhesion to molding resin.

More specifically, because the vaporizable/foamable component is often moisture, the backing sheet 104 is preferably made of a material having as low a coefficient of water absorption as possible (specifically, at least 0.5% or lower, preferably 0.2% or lower).

Such a material is exemplified by undrawn or lightly-drawn polyethylene terephthalate film, noncrystalline or low-crystalline polyester copolymer film, polypropylene film whose coefficient of water absorption is 0.03% or lower which is 0.15% or lower, polyethylene film whose coefficient of water absorption is 0.01% or lower, polystyrene film whose coefficient of water absorption is 0.07% or lower, fluoric film whose coefficient of water absorption is 0.03% or lower, polybutylene terephthalate film whose coefficient of water absorption is 0.8% or lower, methacryl-styrene copolymer film whose coefficient of water absorption is 1.5% or lower, fire retardant acrylonitrile butadiene-styrene copolymer film whose coefficient of water absorption is 0.9% or lower, polycarbonate film whose coefficient of water absorption is 0.5% or lower, polyurethane film whose coefficient of water absorption is 1% or lower, polyvinyl chloride film whose coefficient of water absorption is 0.1%, or lower, or the like.

(Fifth Embodiment)

Next, a fifth embodiment of the present invention is described. This fifth embodiment is intended to solve a fifth issue, i.e., prevention of warp.

As the fifth issue, there has been an issue that if the material of the substrate sheet and the material of the backing sheet largely differ in shrinkage factor from each other (for example, concretely, in the case where the substrate sheet is an acrylic film (with a shrinkage factor of around 5/1000) and the backing sheet is an ordinary polypropylene film (with a shrinkage factor of around 15/1000)), then there occurs a warp to the in-mold decorating sheet after the three-dimensional working process due to the difference in shrinkage factor, making it difficult to fulfill trimming and injection molding decoration processes.

With respect to this fifth issue, the in-mold decorating sheet of the fifth embodiment of the present invention is so constituted that the difference in shrinkage factor between the substrate film and the backing sheet is 0/1000 - 8/1000, or that the backing sheet is a lamination of a plurality of sheets while the difference in shrinkage factor between the substrate sheet and the farthest backing sheet from the substrate sheet is 0/1000 - 8/1000.

That is, the in-mold decorating sheet is so constituted that either the substrate sheet or the backing sheet of the in-mold decorating sheet is modified so that the difference in shrinkage factor between the substrate sheet and the backing sheet is 0/1000 - 8/1000.

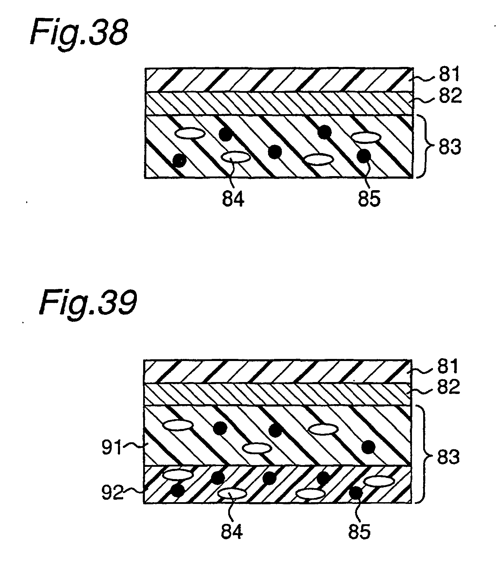

In most cases, it is easier to accomplish the modification by applying an additive material to the sheet having the larger shrinkage factor. As a concrete example, as shown in Fig. 38, in the case of an in-mold decorating sheet in which the substrate sheet is an acrylic film 81 and the backing sheet is a polypropylene film 83, it is recommendable to modify the polypropylene film, which is the larger in molding shrinkage factor. It is noted that reference numeral 82 denotes a pattern layer.

That is, as shown in Fig. 38, olefin rubber 84 and a filler material 85 are contained in the polypropylene film 83 so that molding shrinkage is suppressed. As the mechanism therefor, it could be considered that the rubber 84 and the filler material 85, when contained, cause polymer chains of the polypropylene resin deprived of the degree of freedom, lessening the space that allows shrinkage in the polypropylene resin.

More specifically, the olefin rubber is exemplified by EPM (ethylene propylene rubber), EPDM (ethylene-propylene-diene terpolymer), TPE (thermoplastic elastomer), and EVA (ethylene-vinyl acetate). The filler material is exemplified by talc and calcium carbonate as well as by titanium oxide, aluminum hydroxide, ferrite, carbon fiber, glass fiber, silica, mica, carbon black, clay, alumina, wood meal, felt, or the like.

In the process of cooling the heated sheet, the larger the content of olefin rubber and filler material, the larger the effect of suppressing the gradual shrinkage of the polypropylene film. On the other hand, as the content of the olefin rubber increases, the polypropylene film goes softer and softer so that the in-mold decorating sheet lowers in rigidity. Further, as the content of the filler material increases, the filler material becomes more and more likely to separate from the polypropylene film surface in the vacuum molding process, making the polypropylene film surface into a recessed-and-projected pattern. This recessed-and-projected pattern affects the acrylic film, causing the in-mold decorating sheet to be degraded in design.

As a result of a detailed test, it is found that the contents of the olefin rubber and the filler material are conditioned by the following proper ranges.

In the case where EPM or EPDM used as the olefin rubber, the proper range for the content of the olefin rubber was found to be 20 - 150 parts by weight on the basis of 100 parts by weight of propylene resin. Also, in the case where talc used as the filler material, the proper range for the content of the filler material was found to be 5 - 20 parts by weight on the basis of 100 parts by weight of propylene resin. Further, the best proper range for both was found to be 50 - 100 parts by weight of EPM or EPDM and 10 - 15 parts by weight of talc on the basis of 100 parts by weight of propylene resin.

In addition, as another embodiment, in the event that some failure occurs due to excessive addition of the olefin rubber or the filler material, as shown in Fig. 39, the polypropylene film 83 is formed from a lamination of a plurality of polypropylene film layers 91, 92, wherein

(1) as one method, the olefin rubber and the filler material are contained in only one polypropylene film layer that is the farther from the acrylic film, and as another method, (2) while one polypropylene film layer that is the closer to the acrylic film has a smaller content of the olefin rubber and the filler material, the other polypropylene film layer that is the farther from the acrylic film has a larger content of the olefin rubber and the filler material.

The reason of this is that because the polypropylene film layer closer to the acrylic film has a smaller content of the olefin rubber, the rigidity of the decorating film as a whole is maintained, and yet because the content of the filler material is also small, the filler material is less likely to separate from the polypropylene film surface by heat in the preforming process, where the filler material, even if separated, would be intercepted by the polypropylene film layer that is the closer to the acrylic film, not reaching the acrylic film.

In this case, preferably, the polypropylene film layer closer to the acrylic film is made larger in film thickness, while the polypropylene film layer farther from the acrylic film (i.e., the polypropylene film layer forming the outermost layer) is made smaller in film thickness. In addition, the polypropylene film layer closer to the acrylic film also includes a polypropylene film layer that is in direct contact with the acrylic film. As to the reason of this, generally, there is a tendency that the larger the film thickness, the smaller the shrinkage. Therefore, by the setting that the polypropylene film layer closer to the acrylic film is larger in film thickness, any shrinkage of the polypropylene film layer farther from the acrylic film can be made less affectable on the acrylic film.

The film thickness of the polypropylene film layer farther from the acrylic film (i.e., the polypropylene film layer forming the outermost layer) is, preferably, within a range from a film thickness similar to that of the acrylic film to a double.

As to the reason of this, generally, the polypropylene film layer, even if olefin rubber or filler material are contained therein, does not become so smaller in shrinkage factor as the acrylic film does. Therefore, unless the polypropylene film layer is larger in film thickness than the acrylic film, the in-mold decorating sheet as a whole would be warped toward the polypropylene film layer side. With the polypropylene film layer two times or larger in film thickness than the acrylic film, there is no substantial difference between their shrinkage factors.

As the content of the filler material to be contained in the polypropylene film layer farther from the acrylic film (i.e., the polypropylene film layer forming the outermost layer), its proper amount is 10 - 30 parts by weight on the basis of 100 parts by weight of propylene resin. As to the reason of this, if 30 or more parts by weight of the filler material is contained, the polypropylene film layer would become not only harder to mold into a three-dimensional configuration in the preforming process, but also more difficult to put into close contact with the molding resin (or adhesion layer). Meanwhile, with 10 or less parts by weight of the filler material, the shrinkage suppression effect would be insufficient so that the whole in-mold decorated article would be warped toward the polypropylene film layer side.

(Sixth Embodiment)

Next, a sixth embodiment of the present invention is described. This sixth embodiment is intended to solve a sixth issue, i.e., an improvement in registering accuracy of pattern.

As the sixth issue, there has been an issue that since any of the sheet layers of a three-dimensionally workable in-mold decorating sheet tends to be deformed by printing machine's tensile force or drying heat to be applied in the formation of the pattern layer, the in-mold decorating sheet is applicable only to patterns having less strict registering accuracy such as grain patterns. If these sheet layers are made from too highly heat-resistant material, the sheets become lower in elongation property so that the sheets can no longer be worked into a three-dimensional configuration. Because of this issue, it is inevitably required to select a material which is relatively low in heat resistance. However, in the case where a material of low heat resistance is selected, registering errors are more likely to occur in the printing and drying process, disadvantageously.

With respect to this sixth issue, the in-mold decorating sheet of the sixth embodiment of the present invention is so constituted that, as shown in Figs. 17 to 20, for the formation of the pattern layer 32, a carrier sheet 34 whose dimensional change rate under an ambient temperature of 90°C is within 0.6% is laminated on the substrate sheet 31, and the pattern layer 32 is formed on a surface of the substrate sheet 31 or the backing sheet 33 opposite to the carrier sheet 34, or that for the formation of the pattern layer 32, the pattern layer 32 is formed on a carrier sheet 34 whose dimensional change rate under an ambient temperature of 90°C is within 0.6%, and thereafter the substrate sheet 31 is laminated on the pattern layer 32 side and further the carrier sheet 34 is separated and removed, by which the pattern layer 32 is formed on the surface of the substrate sheet 31 or the backing sheet 33.

The pattern layer 32, which is purposed to express characters, graphics, symbols, and the like on the surface of the in-mold decorated article or to express a colored surface, is formed between the substrate sheet 31 and the backing sheet 33.

The pattern may be all-over solid in silver metallic color or the like, or may be one having a wood grain pattern or a stone grain pattern or the like in a single color or multiple colors. Further, the pattern may be a lamination of a transparent yellow all-over solid or pattern layer and, a silver metallic all-over solid or pattern layer to represent a gold all-over solid or pattern layer.

However, in the case of black-, metallic-color based all-over solid decoration or the like, since the decoration can be achieved by toning the color of the backing sheet, the pattern layer may be omitted.

The pattern layer 32 comprises at least one layer selected from a group consisting of a pigment ink layer composed of pigment and resin binder, a bright pigment layer composed of pearl pigment and resin binder, and a dye ink layer composed of dye and resin binder. The pattern layer 32 is formed by general-purpose printing means (gravure, offset, screen) or by roll coating, reverse coating, lip coating, or the like.

Also, the pattern layer 32 may be a metallic thin film layer or a combination of a metallic thin film layer and a print layer. The metallic thin film layer is formed by vacuum deposition process, sputtering process, ion plating process, plating process, or the like. Metals such as aluminum, nickel, gold, platinum, chromium, iron, copper, tin, indium, silver, titanium, lead, or zinc, or their alloys or compounds, are used depending on the metallic luster color to be expressed.

However, with patterns to which high registering accuracy is required as in the sixth issue described before, there is an issue that registering errors are more likely to occur in the printing and drying process.

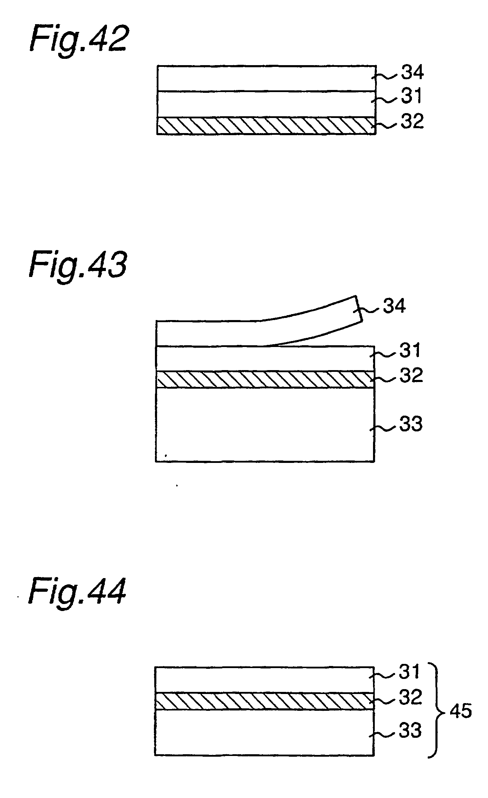

In such a case, for the formation of the pattern layer 32, a carrier sheet 34 whose dimensional change rate under an ambient temperature of 90°C is within 0.6% is laminated on the substrate sheet 31, and the pattern layer 32 is formed on a surface of the substrate sheet 31 or the backing sheet 33 opposite to the carrier sheet 34, or for the formation of the pattern layer 32, the pattern layer 32 is formed on a carrier sheet 34 whose dimensional change rate under an ambient temperature of 90°C is within 0.6%, and thereafter the substrate sheet is laminated on the pattern layer 32 side and further the carrier sheet 34 is separated and removed, by which the pattern layer 32 is formed on the surface of the substrate sheet 31 or the backing sheet 33. That is, it is appropriate that (1) the carrier sheet 34 having a high dimensional stability to heat is laminated on the substrate sheet 31, and then the pattern layer 32 is printed and formed (see Fig. 42); or that (2) the pattern layer 32 is printed and formed on the carrier sheet 34, and then the pattern layer 32 is transferred to the substrate sheet 31.

In more detail, a composite film formed from a lamination of the carrier sheet 34 and the substrate sheet 31 is used as an original fabric, the pattern layer 32 is formed on a surface of the substrate sheet 31 on one side opposite to the carrier sheet 34, and thereafter the carrier sheet 34 is separated and removed. After this, the backing sheet 33 is laminated.

Otherwise, the pattern layer 32 is formed on a surface of the substrate sheet 31 on one side opposite to the carrier sheet 34, and thereafter the backing sheet 33 is laminated on the pattern layer 32 side of the substrate sheet 31. Therefore, the carrier sheet 34 is separated and removed.

Also alternatively, the following way may be taken. As shown in Fig. 18, with another carrier sheet 34 used as an original fabric, the pattern layer 32 is once formed on a surface of the carrier sheet 34, thereafter the substrate sheet 31 is stacked and laminated on the pattern layer 32 side, and thereafter, as shown in Fig. 19, the carrier sheet 34 is separated and removed, by which the pattern layer 32 is transferred to the substrate sheet 31. After this, as shown in Fig. 20, the backing sheet 33 is laminated on the pattern layer 32 side of the substrate sheet 31, by which an in-mold decorating sheet 45 in which the pattern layer 32 is placed between the substrate sheet 31 and the backing sheet 33 is formed (see Fig. 17).

Further, the following way may also be taken. With another carrier sheet 34 used as an original fabric, the pattern layer 32 is formed on a surface of the carrier sheet 34, the backing sheet 33 is stacked and laminated on the pattern layer 32 side, and thereafter the carrier sheet 34 is separated and removed, by which the pattern layer 32 is transferred to the backing sheet 33. After this, the substrate sheet 31 is laminated on the pattern layer 32 side of the backing sheet 33.

Further, the following way may also be taken. As shown in Fig. 42, with another carrier sheet 34 used as an original fabric, the substrate sheet 31 is laminated on a surface of the carrier sheet 34, the pattern layer 32 is formed on one side of the substrate sheet 31 opposite to the carrier sheet 34, and further as shown in Fig. 43, the backing sheet 33 is laminated on the pattern layer 32. Thereafter, the carrier sheet 34 is separated and removed, by which an in-mold decorating sheet 45 in which the pattern layer 32 is placed between the substrate sheet 31 and the backing sheet 33 is formed.

As the carrier sheet 34, one whose dimensional change rate under an ambient temperature of 90°C is within 0.6% and which is high in tensile strength and superior in surface smoothness is used.

As a carrier sheet 34 whose dimensional change rate under an ambient temperature of 90°C is within 0.6%, since the sheet is to be separated and removed in the manufacturing process of the in-mold decorating sheet, it is preferable to use inexpensive biaxially oriented polyester films or biaxially oriented polypropylene films.

As to the setting of the ambient temperature to 90°C, the atmospheric temperature inside the drying unit installed in a normal multicolor printing machine is 60 - 90°C, and the highest value, 90°C, is herein adopted. The higher the drying temperature the drying process is performed, the more the residual organic solvent contained in the ink of the pattern layer 32 can be scattered so that the in-mold decorating sheet 45 can be prevented from deterioration due to residual organic solvent.

Also, the dimensional change rate herein refers to a rate (0.5/80, i.e. 0.6% as an example of the sixth embodiment of the present invention) of a dimensional change (within 0.5 mm as an example of the sixth embodiment of the present invention) due to elongation or shrinkage resulting when a sheet having a specified length dimension (80 mm as an example of the sixth embodiment of the present invention) at normal temperature (20°C) is left under an ambient temperature (90°C as an example of the sixth embodiment of the present invention).

As to the setting of the dimensional change rate to within 0.6%, when in-mold decorated sheet articles were actually manufactured, the size of the manufactured in-mold decorating sheets was approximately 80 mm x 250 mm for an air-conditioner heater panel, 160 mm x 450 mm for a speed meter/fuel display panel, and 250 mm x 800 mm for a front grille. Therefore, with respect to the shortest dimension, 80 mm, out of these in-mold decorating sheets, there is a need for a printing registering accuracy of ±0.5 mm in order that ordinary people do not have a feeling of wrongness against printing registering differences, hence a value of 0.5/80, i.e., within 0.6%.

The thickness of the carrier sheet 34 is, preferably, within a range of 5 - 300 μm. With the thickness under 5 μm, the carrier sheet 34 could be easily cut by the tensile force of the printing machine; with the thickness beyond 300 μm, the carrier sheet 34 would be difficult to set up to the rotary printing press, causing the productivity to lower. Particularly, a carrier sheet 34 having a thickness of 15 - 50 μm offers better workability in laminating to or separating from the substrate sheet 31, thus more preferable. Like this, as compared with a case where the pattern layer 32 is formed by printing directly on the substrate sheet 31 of the order of several hundreds μm, use of a carrier sheet 34 smaller in thickness enables the printing and production by multicolor rotary press, which leads to an improvement in mass productivity.

In order to facilitate the separation of the carrier sheet 34 from the substrate sheet 31 or the transfer of the pattern layer 32 from the carrier sheet 34 to the substrate sheet 31 or the backing sheet, it is also advisable to execute a mold release treatment on the surface of the carrier sheet 34 so as to facilitate the separation.

However, with excessive separability, the carrier sheet 34 might be separated from the substrate sheet before the formation of the pattern layer 32, or the pattern layer 32 could not be held on the carrier sheet 34 until the pattern layer 32 is transferred. Therefore, the carrier sheet 34 is controlled so as to have an appropriate peeling strength of about 0.05-1.08 N/cm (5 - 100 gf/cm).

More specifically, it is recommendable to adopt a heat lamination process, in which with a mold release layer formed on the carrier sheet 34, the carrier sheet 34 and the substrate sheet 31, after laminated together, are bonded to each other by applying a pressure thereto while heated on one side or both sides.

Next, the method for manufacturing an in-mold decorated article by using the in-mold decorating sheet 45 having the above-described constitution is described.

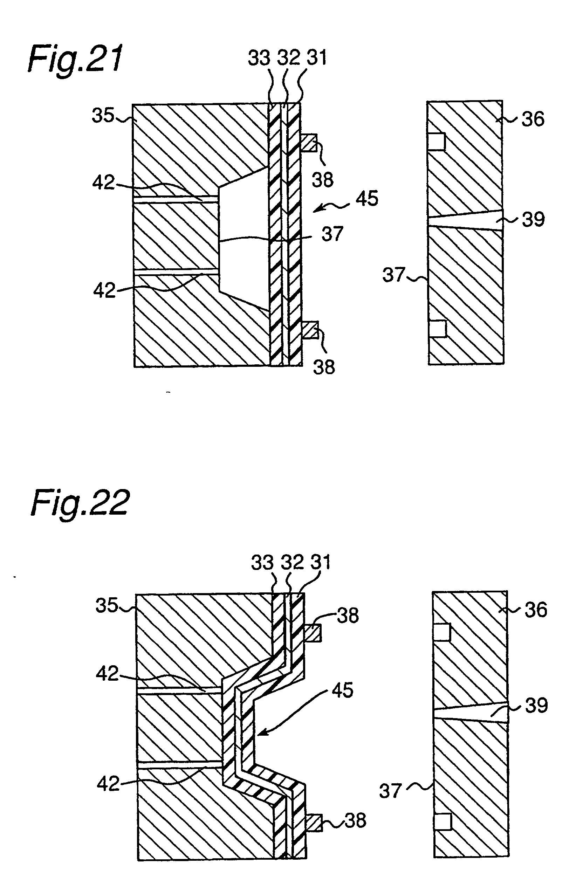

First, the in-mold decorating sheet 45 is set to the surface of the movable die 35, which is an injection mold, by means of the clamp member 38 (see Fig. 21).

A concrete example of the way of setting to the movable die 35 is as follows. A longer in-mold decorating sheet 45 is once wound up on a roll shaft so as to be formed into a roll state, and the resulting roll is placed at an upper portion of the movable die 35 for injection molding so as to be movable integrally with the movable die 35. Then, the in-mold decorating sheet 45, while being wound out from the roll, is passed through between the retracted movable die 35 and the stationary die 36 so as to be wound up by a roll shaft of a film winding means which is set at a lower portion of the injection-molding movable die 35 so as to be movable integrally with the movable die 35. Another example may be that a leaf-like in-mold decorating sheet 45 is set to the surface of the movable die 35 by robot or human hand. For the setting of the in-mold decorating sheet 45 to the surface of the movable die 35, after the in-mold decorating sheet 45 is placed on the surface of the movable die 35, the position of the in-mold decorating sheet 45 relative to the surface of the movable die 35 is determined by a positioning sensor or the like, and the in-mold decorating sheet 45 may be pressed by the clamp member 38 to the surface of the injection-molding movable die 35.

Subsequently, the in-mold decorating sheet 45 is set to the surface of the injection-molding movable die 35, and thereafter with the use of the vacuum suction holes 42 formed in the injection-molding movable die 35, the in-mold decorating sheet 45 is vacuum-sucked along the cavity-forming surface 37 of the movable die 35, by which the in-mold decorating sheet 45 is worked into a three-dimensional configuration along the recessed portion of the injection-molding movable die 35, i.e., the cavity-forming surface 37 of the cavity 43 (see Fig. 22). A concrete example is a method which includes steps of heating to its softening point or higher the in-mold decorating sheet 45 set to the surface of the movable die 35 by a heating plate or the like inserted between the movable die 35 and the stationary die 36, and thereby softening the in-mold decorating sheet 45 closing the space between the recessed portion of the injection-molding movable die 35 and the in-mold decorating sheet 45, and performing evacuation and vacuum suction through the vacuum suction holes 42 so that the in-mold decorating sheet 45 is put into close contact with the recessed-portion inner surface (cavity-forming surface 37) of the injection-molding movable die 35. In the process of working into a three-dimensional configuration, or in the process of pressing and clamping the in-mold decorating sheet 45 by the clamp member 38, the trimming process of the unnecessary portions of the in-mold decorating sheet 45 may be done.

Instead of this method, before the in-mold decorating sheet 45 is set to the surface of the injection-molding movable die 35, the in-mold decorating sheet 45 may preparatorily be worked into a desired configuration with a mold for three-dimensional working and molding other than the injection-molding movable die 35 and stationary die 36, and also trimmed into a desired configuration, and then the three-dimensionally worked in-mold decorating sheet 45 is fitted into the recessed portion of the injection-molding movable die 35. As the method for three-dimensional working, there are vacuum molding method, air-pressure forming method, pressing method in which heated rubber is pressed, press molding method, and the like. In addition, trimming process may be done concurrently with the process of working into a three-dimensional configuration.

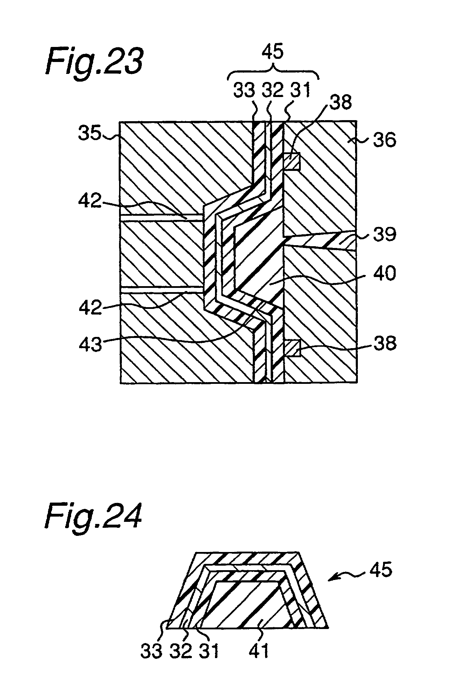

Next, with the movable die 35 clamped to the stationary die 36, the molding resin 40 in molten state is injected from the gate portion 39 of the stationary die 36 into the cavity 43, and the molding resin 40 is solidified so that the resin molded article 41 is formed within the cavity 43 while the in-mold decorating sheet 45 is bonded integrally to the surface of the resin molded article 41 concurrently (see Fig. 23).

Thereafter, the resin molded article 41 is taken out from the movable die 35, and then unnecessary portions of the in-mold decorating sheet 45 bonded to the resin molded article 41 are removed (see Fig. 24). In the case where the in-mold decorating sheet 45 has preparatorily been trimmed into a desired configuration as described above, the step of removing the unnecessary portions of the in-mold decorating sheet 45 is unnecessary.

The movable die 35 and the stationary die 36 as the injection mold are not particularly limited to the above embodiment. It is appropriate to use a mold which is made up of a movable die 35 and a stationary die 36 having a gate portion 39 for injecting the molding resin 40, where when the stationary die 36 and the movable die 35 are closed, a singularity or plurality of cavities 43 surrounded by the cavity-forming surfaces 37 of the stationary die 36 and the movable die 35 are formed. The in-mold decorating sheet 45 set within the cavities 43 formed by the movable die 35 and the stationary die 36 for injection molding covers the cavity-forming surfaces 37. The cavities 43 may be provided as those which form a hole portion in the resin molded article 41. The recessed portion that form the cavities 43 may be formed in either the stationary die 36 or the movable die 35. The movable die 35 or the stationary die 36 may have a clamp member 38 for pressing and fixing the in-mold decorating sheet 45 around the recessed portion (see Figs. 21 to 23). The clamp member 38 may also be installed in the stationary die 36 or the movable die 35.

The molding resin 40 is not particularly limited. Typical molding resins 40 to be used for interior automotive trims and exterior automotive trims are exemplified by polycarbonate resin, acrylonitrile butadiene resin, talc-containing polypropylene resin, and alloys of these resins.

In addition, whereas the above description applies, as it is, to horizontal injection molding machines, the relationship between the stationary mold 36 and the movable mold 35 is reversed in the case of a vertical injection molding machine. Also, the mold of the injection molding machine is applicable not only to two mold type but also three mold type similarly.

(Seventh Embodiment)

Next, a seventh embodiment of the present invention is described. This seventh embodiment is intended to solve a seventh issue, i.e., deficiency of opacifying power of the pattern layer.

The pattern layer, which is formed by coating, shows, in some cases, a color vision with high opacity and, in other cases, a color vision without high opacity, depending on differences in opacifying power among coloring materials for individual colors. The seventh issue is that when a pattern layer must be formed with a color vision quite different from the color of the backing sheet because of low opacifying power (for example, in the case of high-chroma yellow), there are some cases where a desired color vision cannot be obtained due to effects of the color of the backing sheet.

With respect to the seventh issue, the in-mold decorating sheet of the seventh embodiment of the present invention is so constituted that a second pattern layer 68 is formed between the backing sheet 66 and the pattern layer 63, as shown in Fig. 29.

More specifically, the pattern layer 63, which is formed by general-purpose printing means or the like, shows, in some cases, a color vision with high opacity and, in other cases, a color vision without high opacity, depending on differences in opacifying power among coloring materials for individual colors.

When the pattern layer 63 must be formed with a color vision quite different from the color of the backing sheet 66 because of low opacifying power (for example, in the case of high-chroma yellow), there are some cases where a desired color vision cannot be obtained due to effects of the color of the backing sheet 66.

In such a case, the second pattern layer 68 is formed in order to enhance the opacifying power of the pattern layer 63.

The second pattern layer 68 may be formed either by coating or as a sheet.

The material of the second pattern layer 68 is, preferably, one which prevents vaporization and foaming, as in the case of the backing sheet 66.

The reason of this is that even in the case where the backing sheet 66 is not made of a material that prevents vaporization and foaming, the provision of the second pattern layer 68 that prevents vaporization and foaming makes it possible to suppress the occurrence that the surface of the in-mold decorating sheet 61 appears an orange-peel state even upon occurrence of vaporization and foaming of the foaming components in the backing sheet 66. This could be attributed to the fact that it is only the backing sheet that vaporizes and foams, and the second pattern layer 68 acts to prevent the gas generated from the backing sheet from reaching the pattern layer 63.

Concrete examples of such a material of the second pattern layer 68 are polyethylene resins, polypropylene resins, styrene resins, fire retardant ABS resins, or thermoplastic polybutadiene resins. More specifically, available as the material are polypropylene resin whose coefficient of water absorption is 0.03% or lower, polyethylene resin whose coefficient of water absorption is 0.01% or lower, polystyrene resin whose coefficient of water absorption is 0.07% or lower, fluoric resin whose coefficient of water absorption is 0.03% or lower, polyethylene terephthalate resin whose coefficient of water absorption is 0.15% or lower, polybutylene terephthalate resin whose coefficient of water absorption is 0.08% or lower, methacryl-styrene copolymer resin whose coefficient of water absorption is 0.15% or lower, fire retardant acrylonitrile butadiene-styrene copolymer resin (fire retardant ABS resin) whose coefficient of water absorption is 0.09% or lower, or thermoplastic polybutadiene resin whose coefficient of water absorption is 0.09% or lower.

The thickness of the second pattern layer 68 is, preferably, not less than 10 µm in order to obtain the opacity and vaporization/foaming prevention properties, and less than 200 µm for prevention of the visibility of trimming cross-section lines.

Although the molding resin is not particularly limited, the most typical molding resins for use in interior and exterior automotive trims or electrical appliances are polystyrene, acrylonitrile styrene copolymer resin, acrylonitrile butadiene-styrene copolymer resin, or poly carbonate resin and polypropylene resin and the like.

When polystyrene, acrylonitrile styrene copolymer resin, acrylonitrile butadiene-styrene copolymer resin, or poly carbonate resin is used as the molding resin, the primary material for the in-mold decorating sheet is, preferably, acrylic resin, styrenic resin (including styrenic elastomer resins), acrylonitrile butadiene-styrene base resin, thermoplastic polybutadiene base resin, polycarbonate base resin, or the like, in view of the recyclability after use. When polypropylene resin is used as the molding resin, the material of the in-mold decorating sheet is, preferably, polypropylene resin or polyethylene resin in view of the recyclability after use and the adhesion with the molding resin.

The most common method for three-dimensional working is vacuum molding method, which is a method in which the in-mold decorating sheet is heated to the softening point or higher so as to be put into a soft and extendable state, and then vacuum-sucked and pulled in so as to come into close contact with the inner surface of the cavity of the mold for vacuum molding, and thus molded into a desired three-dimensional configuration.

Other three-dimensional working methods are air-pressure forming method, pressing method in which heated rubber is pressed, press molding method, and the like.

After the three-dimensional working, unnecessary portions of the in-mold decorating sheet, which are excluded from the decoration of the resin molded article, are removed by trimming. As the trimming method, usable are a method in which the in-mold decorating sheet is burned out and cut by irradiation of a laser beam, a method in which the in-mold decorating sheet is punched out by press working with a punching die prepared for trimming use, and the like.

The in-mold decorating sheet of a three-dimensional configuration after the trimming removal is fitted and set into the injection mold, and with the mold clamped, the molding resin in molten state is injected into the cavity and then cooled so that the resin molded article is formed, while the in-mold decorating sheet is integrally bonded to the surface of the resin molded article concurrently.

In the foregoing embodiments, it is also possible to make the in-mold decorating sheet colored-looking by coloring the substrate sheet or backing sheet without providing any pattern layer.

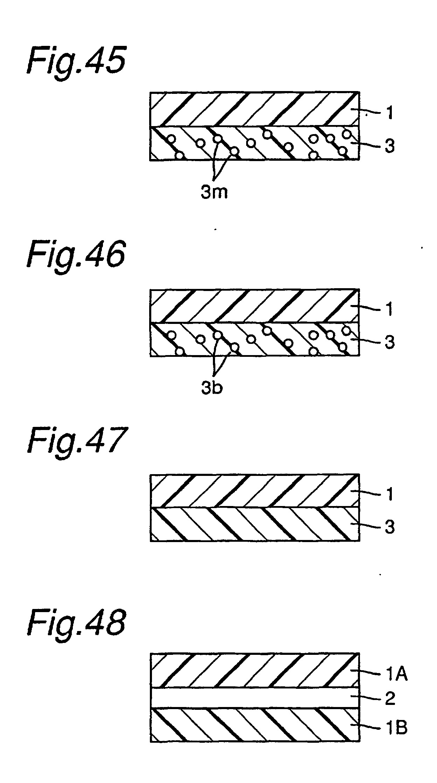

More specifically, for example, Fig. 45 shows a state in which a backing sheet 3 adjacent to a substrate sheet 1 is a colored sheet of metallic red or the like, with black pigment 3m mixed therein. Also, Fig. 46 shows a state in which a backing sheet 3 adjacent to a substrate sheet 1 having a thickness of not more than 200 µm is a colored sheet of metallic red or the like, with black pigment 3b mixed therein. Fig. 47 shows a state in which a backing sheet 3 is adjacent to a colored substrate sheet 1. Fig. 48 shows a state in which the total thickness is not more than 200 µm and in which a transparently colored pattern layer 2 is set between two colorless transparent substrate sheets 1A, 1B.

(Working Example 1)

An in-mold decorating sheet was manufactured under the following conditions.

On top of an acrylic film having a film thickness of 50 µm and a surface pencil hardness of HB, a 5 µm thick pattern layer was formed with the use of acrylic ink. Further on top of this, with chlorinated polypropylene based adhesive ink interposed, a 200 µm thick black polypropylene film (coefficient of water absorption: 0.01%; color: L*=10, a*=3, b*=-5), and a 150 µm thick blackish brown polypropylene based film (coefficient of water absorption: 0.03%; with 60 parts by weight of EPDM and 15 parts by weight of talc blended on the basis of 100 parts by weight of polypropylene; color: L*=10, a*=3, b*=-5) were sequentially laminated, by which an in-mold decorating sheet having a thermal deformation temperature of 140°C was obtained. This in-mold decorating sheet exhibited a 200% elongation performance without being thermally decomposed when heated to 160°C, and had a Young's modulus of 834 N/mm$^2$ (85 kgf/mm$^2$) at normal temperature.

This sheet was vacuum-molded by heating to 160°C, trimmed by laser, and inserted into an injection mold. Then polypropylene resin was injected at a molding temperature of 220°C, by which an in-mold decorated article was obtained.

(Working Example 2)

An in-mold decorating sheet was manufactured under the following conditions.

On top of a crystalline polypropylene film having a film thickness of 200 µm and a surface pencil hardness of 2B, a 5 µm thick pattern layer was formed with the use of 5 µm urethane based ink. Further on top of this, with chlorinated polypropylene based adhesive ink interposed, a 400 µm thick black polypropylene film (coefficient of water absorption: 0.01%; color: L*=8, a*=6, b*=-2), was laminated, by which an in-mold decorating sheet having a thermal deformation temperature of 150°C was obtained. This in-mold decorating sheet exhibited a 130% elongation performance without being thermally decomposed when heated to 170°C, and had a Young's modulus of 686 N/mm$^2$ (70 kgf/mm$^2$) at normal temperature.

This sheet was vacuum-molded by heating to 170°C, trimmed by laser, and inserted into an injection mold. Then, polypropylene resin was injected at a molding temperature of 220°C, by which an in-mold decorated article was obtained.

(Working Example 3)

An in-mold decorating sheet was manufactured under the following conditions.

On top of an acrylic film having a film thickness of 50 µm and a surface pencil hardness of HB, a 5 µm thick pattern layer was formed with the use of acrylic ink. Further on top of this, with vinyl acetate based adhesive ink interposed, an intermediate sheet layer formed by a 100 μm thick polystyrene film (coefficient of water absorption: 0.1%; color: yellow), and a 350 μm thick black acrylonitrile butadiene-styrene film (coefficient of water absorption: 0.4%; color: L*=7, a*=1, b*=1) were sequentially laminated, by which an in-mold decorating sheet having a thermal deformation temperature of 110°C was obtained. This in-mold decorating sheet exhibited a 180% elongation performance without being thermally decomposed when heated to 150°C, and had a Young's modulus of 1373 N/mm$^2$ (140 kgf/mm$^2$) at normal temperature.

This sheet was vacuum-molded by heating to 150°C, trimmed by laser, and inserted into an injection mold. Then acrylonitrile butadiene-styrene resin was injected at a molding temperature of 230°C, by which an in-mold decorated article was obtained.

(Working Example 4)

An in-mold decorating sheet was manufactured under the following conditions.

On top of a noncrystalline polyester copolymer film having a film thickness of 60 μm, a 500Å metallic pattern layer formed of an evaporated aluminum film and a 2 μm adhesive layer formed of vinyl acetate based ink were formed sequentially.

Thereafter, with polyurethane based dry laminate adhesive ink interposed, a 200 μm thick black polypropylene film (coefficient of water absorption: 0.01%; color: L*=10, a*=3, b*=-5), and a 250 μm thick blackish brown polypropylene based film (coefficient of water absorption: 0.03%; with 60 parts by weight of EPDM and 15 parts by weight of talc blended on the basis of 100 parts by weight of polypropylene; color: L*=10, a*=3, b*=-5) were sequentially laminated, by which an in-mold decorating sheet having a thermal deformation temperature of 130°C was obtained. This in-mold decorating sheet exhibited a 160% elongation without being thermally decomposed when heated to 150°C, and had a Young's modulus of 883 N/mm$^2$ (90 kgf/mm$^2$) at normal temperature.

This sheet was vacuum-molded by heating to 160°C, trimmed by laser, and inserted into an injection mold. Then polypropylene resin was injected at a molding temperature of 220°C, by which an in-mold decorated article was obtained.

(Working Example 5)

An in-mold decorating sheet was manufactured under the following conditions.

On top of a biaxially oriented polyethylene terephthalate film having a film thickness of 25 μm, a four-color surprinted pattern layer having a registering accuracy within 0.2 mm, and a 2 μm adhesive layer of vinyl acetate based ink were sequentially formed.

The ink layer side of this film was stacked on a polycarbonate film having a film thickness of 80 μm and a surface pencil hardness of HB, and pressed by a 220°C thermal transfer roll, by which the pattern layer and the adhesive layer were transferred onto the acrylic film side.

Further on top of this, with vinyl acetate based adhesive ink interposed, an intermediate sheet layer formed by a 100 μm thick polystyrene film (coefficient of water absorption: 0.1%; color: yellow), and a 250 μm thick black acrylonitrile butadiene-styrene film (coefficient of water absorption: 0.4%; color: L*=7, a*=1, b*=1) were sequentially laminated, by which an in-mold decorating sheet having a thermal deformation temperature of 120°C was obtained. This in-mold decorating sheet exhibited a 160% elongation performance without being thermally decomposed when heated to 150°C, and had a Young's modulus of 1569 N/mm$^2$ (160 kgf/mm$^2$) at normal temperature.

This sheet was vacuum-molded by heating to 150°C, trimmed by laser, and inserted into an injection mold. Then acrylonitrile butadiene-styrene resin was injected at a molding temperature of 230°C, by which an in-mold decorated article was obtained.

**Claims**

1. An in-mold decorating sheet (3, 45, 61), having high three-dimensional workability, comprising at least a substrate sheet (1, 62) and a backing sheet (33, 66), exhibiting a colored state, and having the following characteristic values:

   (1) when a tensile test is carried out with a 10 mm wide test specimen of the in-mold decorating sheet fixed between a pair of chucks at a chuck-to-chuck distance of 5 mm, by applying a load at a constant rate of 500 mm/min to one end of the test specimen under an ambient temperature condition of 62 - 94°C, the test specimen exhibits a tensile load at break of not less than 0.226 N (23 gf);
   (2) the in-mold decorating sheet changes in properties due to heat within a temperature range of 40 - 200°C;

and when a tensile test is carried out with a 10 mm wide test specimen of the in-mold decorating sheet fixed between a pair of chucks at a chuck-to-chuck distance of 5 mm, by applying a load of 0.196 N (20 gf) at a constant rate of 500 mm/min to one end of the test specimen under an ambient temperature condition within a range from the temperature of property change to a temperature at which the in-mold decorating sheet is thermally decomposed, the test specimen exhibits a tensile elongation at break of not less than 130%.

2. The in-mold decorating sheet according to Claim 1, wherein the manufacturing method of the in-mold decorated article comprises: after working the in-mold decorating sheet into a three-dimensional configuration, removing portions of the in-mold decorating sheet unnecessary for decorating by trimming process; then setting the in-mold decorating sheet into the mold for injection-molding; and after clamping the mold, injecting molding resin and allowing the molding resin to be cooled and solidified, by which the entirety or part of the in-mold decorating sheet is integrally bonded to the surface of the molding resin, and wherein when a tensile test is carried out with a 10 mm wide test specimen of the in-mold decorating sheet fixed between a pair of chucks at a chuck-to-chuck distance of 5 mm, by applying a load at a constant rate of 500 mm/min to one end of the test specimen under an ambient temperature condition of 25°C, a product of Young's modulus and a cube of thickness of the in-mold decorating sheet measured at the tensile test is not less than 9.8 N (1 kgfmm).

3. An in-mold decorating sheet according to Claim 1 or 2, wherein a pencil hardness value of the in-mold decorating sheet measured on one side thereof opposite to the side to be bonded to the molding resin is 3B - 2H.

4. An in-mold decorating sheet according to Claim 3, wherein the substrate sheet is a film selected from among undrawn or lightly-drawn polyethylene terephthalate film, noncrystalline or low-crystalline polyester copolymer film, acrylic film, polycarbonate film, polypropylene film, polybutylene terephthalate film, polystyrene film, polyurethane film, acrylonitrile butadiene-styrene copolymer film, nylon film, polyvinyl chloride film, fluoric film, and cellulose acetate film.

5. An in-mold decorating sheet according to any one of Claims 1 to 4, wherein a thickness of the in-mold decorating sheet is not less than 250 $\mu$m, a thickness of the in-mold decorating sheet excluding thickness of the backing sheet is not more than 200 $\mu$m, and color of the backing sheet is a dark color falling within the following ranges in the CIE1976(L*a*b*) color system:

$$9 \leq L^* \leq 75$$

$$-40 \leq a^* \leq 40$$

$$-60 \leq b^* \leq 30.$$

6. An in-mold decorating sheet according to Claim 5, wherein the backing sheet is a film selected from among acrylic film, undrawn or lightly-drawn polyethylene terephthalate film, noncrystalline or low-crystalline polyester copolymer film, polypropylene film, polyethylene film, polystyrene film, fluoric film, polybutylene terephthalate film, methacryl-styrene copolymer film, acrylonitrile butadiene-styrene copolymer film, polycarbonate film, polyurethane film, nylon film, polyvinyl chloride film, and nitrocellulose film.

7. An in-mold decorating sheet according to any one of Claims 1 to 5, wherein material of the backing sheet is a material which prevents vaporization and foaming.

8. An in-mold decorating sheet according to any one of Claims 1 to 7, wherein the substrate sheet is an acrylic film and the backing sheet is a polypropylene film containing olefin rubber (84) and filler material (85).

9. An in-mold decorating sheet according to Claim 8, wherein when the olefin rubber is ethylene propylene rubber or ethylene-propylene-diene terpolymer, its content is 20 - 150 parts by weight on the basis of 100 parts by weight of propylene resin.

10. An in-mold decorating sheet according to Claim 8, wherein when the filler material is talc, its content is 5 - 20 parts by weight on the basis of 100 parts by weight of propylene resin.

**11.** An in-mold decorating sheet according to any one of Claims 1 to 10, wherein a pattern layer (2, 32) is formed between the substrate sheet and the backing sheet.

**12.** An in-mold decorating sheet according to any one of Claims 1 to 11, wherein a second pattern layer (68) is formed between the backing sheet and the pattern layer.

**13.** An in-mold decorating sheet according to Claim 12, wherein the substrate sheet is made from an easily vaporizable, foamable material, and the second pattern layer is made from a material that prevents vaporization and foaming.

**14.** An in-mold decorating sheet according to Claim 13, wherein the second pattern layer (68) is made from any one selected from among polyethylene resin, polypropylene resin, styrene resin, fire-retardant ABS resin, and thermoplastic polybutadiene resin.

**15.** An in-mold decorating sheet according to any one of Claims 1 to 12, wherein the backing sheet is formed from a plurality of polypropylene film layers, the substrate sheet is an acrylic film, and at least the farthest propylene film layer from the acrylic film contains olefin rubber and/or filler material.

**16.** A method for manufacturing an in-mold decorating sheet, wherein when the pattern layer of the in-mold decorating sheet defined in Claim 11 is formed, a carrier sheet whose dimensional change rate under an ambient temperature of 90°C is within 0.6% is laminated on the substrate sheet, and the pattern layer is formed on a surface of the substrate sheet or the backing sheet opposite to the carrier sheet.

**17.** A method for manufacturing an in-mold decorating sheet, wherein when the pattern layer of the in-mold decorating sheet defined in Claim 11 is formed, the pattern layer is formed on a carrier sheet whose dimensional change rate under an ambient temperature of 90°C is within 0.6%, and thereafter the substrate sheet is laminated on the pattern layer side and further the carrier sheet is separated and removed so that the pattern layer is formed on a surface of the substrate sheet or the backing sheet.

**18.** A method for manufacturing an in-mold decorating sheet according to Claims 16 or 17, wherein the carrier sheet is a biaxially oriented polyester film or a biaxially oriented polypropylene film.

**19.** An in-mold decorated article obtainable by a method comprising: setting into the mold for injection-molding the in-mold decorating sheet as defined in any one of Claims 1 to 15; and after clamping the mold, injecting molding resin and allowing the molding resin to be cooled and solidified, by which the entirety or part of the in-mold decorating sheet is integrally bonded to the surface of the molding resin.

**Patentansprüche**

**1.** In-Mold-Dekorfolie (3, 45, 61) mit hoher dreidimensionaler Verarbeitbarkeit, die zumindest eine Substratfolie (1, 62) und eine Verstärkungsfolie (33, 66) umfasst, einen gefärbten Zustand aufweist und die folgenden Kenngrößen besitzt:

(1) das Teststück weist eine Zugbeanspruchung beim Bruch von nicht weniger als 0,226 N (23 gf) auf, wenn ein Zugtest mit einem 10 mm breiten Teststück der In-Mold-Dekorfolie durchgeführt wird, das zwischen einem Paar Klemmen bei einem Klemmenabstand von 5 mm befestigt ist, durch das Anlegen einer Last bei einer konstanten Geschwindigkeit von 500 mm/min an ein Ende des Teststücks bei einer Umgebungstemperatur von 62 bis 94°C;

(2) die In-Mold-Dekorfolie ändert die Eigenschaften aufgrund von Wärme in einem Temperaturbereich von 40-200°C; und das Teststück weist eine Zugdehnung beim Bruch von nicht weniger als 130 % auf, wenn ein Zugtest mit einem 10 mm breiten Teststück der In-Mold-Dekorfolie durchgeführt wird, das zwischen einem Paar Klemmen bei einem Klemmenabstand von 5 mm befestigt ist, durch das Anlegen einer Last von 0,196 N (20 gf) bei einer konstanten Geschwindigkeit von 500 mm/min an ein Ende des Teststücks bei einer Umgebungstemperatur innerhalb des Bereichs von der Temperatur der Eigenschaftsänderung bis zu der Temperatur, bei der sich die In-Mold-Dekorfolie thermisch zersetzt.

**2.** In-Mold-Dekorfolie gemäss Anspruch 1, wobei das Herstellungsverfahren des In-Mold-Dekorgegenstandes umfasst: nachdem die In-Mold-Dekorfolie in eine dreidimensionale Form gebracht wurde, werden die Teile der In-Mold-Dekorfolie durch einen Schneideprozess entfernt, die für die Verzierung unnötig sind; dann wird die In-Mold-Dekorfolie in die Form für das Spritzgussformen gebracht; und nachdem die Form eingespannt wurde, wird Formharz eingespritzt und man lässt das Formharz abkühlen und fest werden, wodurch die gesamte oder ein Teil der In-Mold-Dekorfolie integral mit der Oberfläche des Formharzes verbunden wird, und wobei das Produkt des Young'schen Moduls und der dritten Potenz der Dicke der In-Mold-Dekorfolie gemessen bei dem Zugtest nicht weniger als 9,8 N (1 kgf/mm) ist, wenn ein Zugtest mit einem 10 mm breiten Teststück der In-Mold-Dekorfolie durchgeführt wird, das zwischen einem Paar Klemmen bei einem Klemmenabstand von 5 mm befestigt ist, durch Anlegen einer Last bei einer konstanten Geschwindigkeit von 500 mm/min an ein Ende des Teststücks bei einer Umgebungstemperatur von 25°C.

3. In-Mold-Dekorfolie gemäss Anspruch 1 oder 2, wobei der Bleistifthärtewert der In-Mold-Dekorfolie 3B bis 2H beträgt, gemessen an einer Seite davon, die gegenüber der Seite liegt, die mit dem Formharz verbunden werden soll.

4. In-Mold-Dekorfolie gemäss Anspruch 3, wobei die Substratfolie eine Folie ausgewählt aus unverstreckter oder leicht verstreckter Polyethylenterephthalatfolie, nicht-kristalliner oder niederkristalliner Polyester-Copolymerfolie, Acrylfolie, Polycarbonatfolie, Polypropylenfolie, Polybutylenterephthalatfolie, Polystyrolfolie, Polyurethanfolie, Acrylnitril-Butadien-Styrol-Copolymerfolie, Nylonfolie, Polyvinylchloridfolie, Fluorfolie und Celluloseacetatfolie ist.

5. In-Mold-Dekorfolie gemäss mindestens einem der Ansprüche 1 bis 4, wobei die Dicke der In-Mold-Dekorfolie nicht weniger als 250 µm ist, die Dicke der In-Mold-Dekorfolie ausschliesslich der Dicke der Verstärkungsfolie nicht mehr als 200 µm ist und die Farbe der Verstärkungsfolie eine dunkle Farbe ist, die in die folgenden Bereiche des Farbsystems CIE1976(L*a*b*) fällt:

$$9 \leq L^* \leq 75$$

$$-40 \leq a^* \leq 40$$

$$-60 \leq b^* \leq 30.$$

6. In-Mold-Dekorfolie gemäss Anspruch 5, wobei die Verstärkungsfolie eine Folie ausgewählt aus Acrylfolie, unverstreckter oder leicht verstreckter Polyethylenterephthalatfolie, nicht-kristalliner oder niederkristalliner Polyester-Copolymerfolie, Polypropylenfolie, Polyethylenfolie, Polystyrolfolie, Fluorfolie, Polybutylenterephthalatfolie, Methacryl-Styrol-Copolymerfolie, Acrylnitril-Butadien-Styrol-Copolymerfolie, Polycarbonatfolie, Polyurethanfolie, Nylonfolie, Polyvinylchloridfolie und Nitrocellulosefolie ist.

7. In-Mold-Dekorfolie gemäss mindestens einem der Ansprüche 1 bis 5, wobei das Material der Verstärkungsfolie ein Material ist, das Verdampfen und Schäumen verhindert.

8. In-Mold-Dekorfolie gemäss mindestens einem der Ansprüche 1 bis 7, wobei die Substratfolie eine Acrylfolie und die Verstärkungsfolie eine Polypropylenfolie ist, die ein Olefingummi (84) und ein Füllmaterial (85) enthält.

9. In-Mold-Dekorfolie gemäss Anspruch 8, wobei, wenn das Olefingummi ein Ethylenpropylengummi oder ein Ethylen-Propylen-Dien-Terpolymer ist, sein Gehalt 20 bis 150 Gew.% ist bezogen auf 100 Gew.% Propylenharz.

10. In-Mold-Dekorfolie gemäss Anspruch 8, wobei, wenn das Füllmaterial Talk ist, sein Gehalt 5 bis 20 Gew.% ist bezogen auf 100 % Propylenharz.

11. In-Mold-Dekorfolie gemäss mindestens einem der Ansprüche 1 bis 10, wobei eine Musterschicht (2, 32) zwischen der Substratfolie und der Verstärkungsfolie ausgebildet ist.

12. In-Mold-Dekorfolie gemäss mindestens einem der Ansprüche 1 bis 11, wobei eine zweite Musterschicht (68) zwischen der Verstärkungsfolie und der Musterschicht ausgebildet ist.

13. In-Mold-Dekorfolie gemäss Anspruch 12, wobei die Substratfolie aus einem leicht verdampfbaren, schäumbaren Material hergestellt ist und die zweite Musterschicht aus einem Material hergestellt ist, welches das Verdampfen und Schäumen verhindert.

**14.** In-Mold-Dekorfolie gemäss Anspruch 13, wobei die zweite Musterschicht (68) aus einem beliebigen Harz hergestellt ist ausgewählt aus Polyethylenharz, Polypropylenharz, Styrolharz, flammhemmendem ABS-Harz und thermoplastischem Polybutadienharz.

**15.** In-Mold-Dekorfolie gemäss mindestens einem der Ansprüche 1 bis 12, wobei die Schutzschicht aus mehreren Polypropylenfilmschichten gebildet ist und die Substratfolie ein Acrylfilm ist und zumindest die Propylenfilmschicht, die am weitesten von der Acrylschicht entfernt ist, ein Olefingummi und/oder Füllmaterial enthält.

**16.** Verfahren zur Herstellung einer In-Mold-Dekorfolie, wobei, wenn die Musterschicht der in Anspruch 11 definierten In-Mold-Dekorfolie gebildet wird, eine Trägerfolie, deren Grad der Dimensionsänderung bei einer Umgebungstemperatur von 90°C bei 0,6 % liegt, auf die Substratfolie laminiert wird, und die Musterschicht auf einer der Trägerfolie gegenüberliegenden Oberfläche der Substratfolie oder der Verstärkungsfolie gebildet wird.

**17.** Verfahren zur Herstellung einer In-Mold-Dekorfolie, wobei, wenn die Musterschicht der in Anspruch 11 definierten In-Mold-Dekorfolie gebildet wird, die Musterschicht auf einer Trägerfolie gebildet wird, deren Grad der Dimensionsänderung bei einer Umgebungstemperatur von 90°C innerhalb von 0,6 % liegt, und danach die Substratfolie auf die Seite der Musterschicht laminiert wird, und weiterhin die Trägerfolie abgetrennt und entfernt wird, so dass die Musterschicht auf einer Oberfläche der Substratfolie oder der Verstärkungsfolie gebildet wird.

**18.** Verfahren zur Herstellung einer In-Mold-Dekorfolie gemäss den Ansprüchen 16 oder 17, wobei die Trägerfolie eine biaxial orientierte Polyesterfolie oder eine biaxial orientierte Polypropylenfolie ist.

**19.** In-Mold-Dekorgegenstand, erhältlich durch ein Verfahren, das umfasst: Einsetzen der wie in mindestens einem der Ansprüche 1 bis 15 definierten In-Mold-Dekorfolie in die Form für das Spritzgiessen; und Einspritzen des Formharzes nach dem Einspannen der Form und Abkühlenlassen und Festwerdenlassen des Formharzes, wodurch die gesamte oder ein Teil der In-Mold-Dekorfolie mit der Oberfläche des Formharzes integral verbunden wird.

**Revendications**

**1.** Feuille de décoration au moulage (3, 45, 61), ayant une aptitude au façonnage tridimensionnel élevée, comportant au moins une feuille de substrat (1, 62) et une feuille de renforcement (33, 66), présentant un état coloré, et ayant les valeurs caractéristiques suivantes :

(1) lorsqu'un test de traction est effectué à l'aide d'un spécimen test d'une largeur de 10 mm de la feuille de décoration au moulage fixé entre une paire de mandrins à une distance mandrin-mandrin de 5 mm, en appliquant une charge à une vitesse constante de 500 mm/min à une extrémité du spécimen test sous une condition de température ambiante de 62-94°C, le spécimen test présente une charge de traction à la rupture qui n'est pas inférieure à 0,226 N (23 gf),
(2) la feuille de décoration au moulage change de propriétés du fait d'une chaleur dans une plage de température de 40 à 200°C, et lorsqu'un test de traction est effectué à l'aide d'un spécimen test d'une largeur de 10 mm de la feuille de décoration au moulage fixé entre une paire de mandrins à une distance mandrin-mandrin de 5 mm, en appliquant une charge de 0,196 N (20 gf) à une vitesse constante de 500 mm/min à une extrémité du spécimen test sous une condition de température ambiante dans une plage allant de la température de changement de propriété à une température à laquelle la feuille de décoration au moulage est thermiquement décomposée, le spécimen test présente un allongement en traction à la rupture qui n'est pas inférieur à 130 %.

**2.** Feuille de décoration au moulage selon la revendication 1, dans laquelle le procédé de fabrication de l'article décoré au moulage comporte les étapes consistant à : après façonnage de la feuille de décoration au moulage en une configuration tridimensionnelle, retirer les parties de la feuille de décoration au moulage inutiles pour la décoration par un procédé de détourage ; positionner alors la feuille de décoration au moulage dans le moule pour un moulage par injection, et après fermeture du moule, injecter une résine de moulage et permettre à la résine de moulage d'être refroidie et solidifiée, ce par quoi la totalité ou une partie de la feuille de décoration au moulage est liée en un seul bloc à la surface de la résine de moulage, et dans lequel lorsqu'un test de traction est effectué à l'aide d'un spécimen test d'une largeur de 10 mm de la feuille de décoration au moulage fixé entre une paire de mandrins à une distance mandrin-mandrin de 5 mm, en appliquant une charge à une vitesse constante de 500 mm/min à une extrémité du spécimen test sous une condition de température ambiante de 25°C, un produit du module de Young et du cube de l'épaisseur de la feuille de décoration au moulage mesurée lors du test de traction n'est pas inférieur à 9,8 N (1 kgfmm).

3. Feuille de décoration au moulage selon la revendication 1 ou 2, dans laquelle une valeur de dureté au crayon de la feuille de décoration au moulage mesurée sur un côté de celle-ci opposé au côté à lier à la résine de moulage est de 3B-2H.

4. Feuille de décoration au moulage selon la revendication 3, dans laquelle la feuille de substrat est un film sélectionné parmi un film de polyéthylène téréphtalate non-étiré ou légèrement étiré, un film de copolymère de polyester non-cristallin ou faiblement cristallin, un film acrylique, un film de polycarbonate, un film de polypropylène, un film de polybutylène téréphtalate, un film de polystyrène, un film de polyuréthanne, un film de copolymère d'acrylonitrile butadiène-styrène, un film de Nylon, un film de chlorure de polyvinyle, un film fluorique et un film d'acétate de cellulose.

5. Feuille de décoration au moulage selon l'une quelconque des revendications 1 à 4, dans laquelle l'épaisseur de la feuille de décoration au moulage n'est pas inférieure à 250 $\mu$m, l'épaisseur de la feuille de décoration au moulage en excluant l'épaisseur de la feuille de renforcement n'est pas supérieure à 200 $\mu$m, et la couleur de la feuille de renforcement est une couleur sombre se trouvant dans les plages suivantes du système de couleur CIE1976 (L*a*b*) :

$$9 \leq L^* \leq 75$$

$$-40 \leq a^* \leq 40$$

$$-60 \leq b^* \leq 30.$$

6. Feuille de décoration au moulage selon la revendication 5, dans laquelle la feuille de renforcement est un film sélectionné parmi un film acrylique, un film de polyéthylène téréphtalate non-étiré ou légèrement étiré, un film de copolymère de polyester non-cristallin ou faiblement cristallin, un film de polypropylène, un film de polyéthylène, un film de polystyrène, un film fluorique, un film de polybutylène téréphtalate, un film de copolymère de méthacryle-styrène, un film de copolymère d'acrylonitrile butadiène-styrène, un film de polycarbonate, un film de polyuréthanne, un film de Nylon, un film de chlorure de polyvinyle et un film de nitrocellulose.

7. Feuille de décoration au moulage selon l'une quelconque des revendications 1 à 5, dans laquelle le matériau de la feuille de renforcement est un matériau qui empêche la vaporisation et l'expansion.

8. Feuille de décoration au moulage selon l'une quelconque des revendications 1 à 7, dans laquelle la feuille de substrat est un film acrylique et la feuille de renforcement est un film de polypropylène contenant un caoutchouc d'oléfine (84) et un matériau de charge (85).

9. Feuille de décoration au moulage selon la revendication 8, dans laquelle le caoutchouc d'oléfine est un caoutchouc d'éthylène-propylène ou un terpolymère d'éthylène-propylène-diène, sa teneur est de 20 à 150 parties en poids sur la base de 100 parties en poids de la résine de propylène.

10. Feuille de décoration au moulage selon la revendication 8, dans laquelle, lorsque le matériau de charge est du talc, sa teneur est de 5 à 20 parties en poids sur la base de 100 parties en poids d'une résine de propylène.

11. Feuille de décoration au moulage selon l'une quelconque des revendications 1 à 10, dans laquelle une couche de motif (2, 32) est formée entre la feuille de substrat et la feuille de renforcement.

12. Feuille de décoration au moulage selon l'une quelconque des revendications 1 à 11, dans laquelle une seconde couche de motif (68) est formée entre la feuille de renforcement et la couche de motif.

**13.** Feuille de décoration au moulage selon la revendication 12, dans laquelle la feuille de substrat est constituée d'un matériau facilement vaporisable et expansible, et la seconde couche de motif est constituée d'un matériau qui empêche la vaporisation et l'expansion.

**14.** Feuille de décoration au moulage selon la revendication 13, dans laquelle la seconde couche de motif (68) est constituée d'une quelconque résine sélectionnée parmi une résine polyéthylène, une résine polypropylène, une résine styrène, une résine ABS ignifuge, et une résine polybutadiène thermoplastique.

**15.** Feuille de décoration au moulage selon l'une quelconque des revendications 1 à 12, dans laquelle la feuille de renforcement est formée à partir d'une pluralité de couches de film de polypropylène, la feuille de substrat est un film acrylique, et au moins la couche de film de propylène la plus éloignée du film acrylique contient un caoutchouc d'oléfine et/ou un matériau de charge.

**16.** Procédé pour fabriquer une feuille de décoration au moulage, dans lequel lorsque la couche de motif de la feuille de décoration au moulage de la revendication 11 est formée, une feuille de support dont le taux de changement dimensionnel sous une température ambiante de 90°C est dans la plage de 0,6 %, est laminée sur la feuille de substrat, et la couche de motif est formée sur une surface de la feuille de substrat ou de la feuille de renforcement opposée à la feuille de support.

**17.** Procédé pour fabriquer une feuille de décoration au moulage, dans lequel, lorsque la couche de motif de la feuille de décoration au moulage définie dans la revendication 11 est formée, la couche de motif est formée sur une feuille de support dont le taux de changement dimensionnel sous une température ambiante de 90°C est dans la plage de 0,6 %, et après ceci la feuille de substrat est laminée sur le côté de couche de motif et de plus la feuille de support est séparée et retirée de sorte que la couche de motif est formée sur une surface de la feuille de substrat ou de la feuille de renforcement.

**18.** Procédé pour fabriquer une feuille de décoration au moulage selon la revendication 16 ou 17, dans lequel la feuille de support est un film de polyester orienté de manière biaxiale ou un film de polypropylène orienté de manière biaxiale.

**19.** Article décoré au moulage pouvant être obtenu par un procédé comportant les étapes consistant à : positionner dans le moule pour un moulage par injection la feuille de décoration au moulage comme défini selon l'une quelconque des revendications 1 à 15, et après fermeture du moule, injecter une résine de moulage et permettre à la résine de moulage d'être refroidie et solidifiée, de sorte que la totalité ou une partie de la feuille de décoration au moulage est liée en un seul bloc à la surface de la résine de moulage.

*Fig.1*

*Fig.2*

*Fig.3*

*Fig.4*

Fig.5

Fig.6

Fig.7

Fig.8

*Fig.9*

*Fig.10*

*Fig.11*

*Fig.12*

## Fig.13

PULL AT A RATE OF 500 mm/min

## Fig.14

PULL AT A RATE OF 500 mm/min

*Fig.15*

*Fig.16*

*Fig.17*

*Fig.18*

*Fig.19*

*Fig.20*

*Fig.21*

*Fig.22*

*Fig.23*

*Fig.24*

*Fig.25*

52

50

53

54

## Fig.26

PULL AT A RATE OF 100 mm/min

## Fig.27

PULL AT A RATE OF 100 mm/min

Fig.28

Fig.29

Fig.30

*Fig.31*

*Fig.32*

*Fig.33*

Fig. 34

61

74

*Fig.35*

62
61
63
67
72
73

*Fig.36*

67
62
61
72
63
69

*Fig.37*

62
61
72
67
63
69

*Fig.38*

*Fig.39*

*Fig.40*

101
102
104

*Fig.41*

101
102
104
103

*Fig.42*

*Fig.43*

*Fig.44*

*Fig.45*

*Fig.46*

*Fig.47*

*Fig.48*

## *Fig.49*

TENSILE TEST CURVE AT
AN AMBIENT TEMPERATURE
OF 25°C

TENSILE TEST CURVE AT
TEMPERATURES AT
WHICH AMBIENT
TEMPERATURE VARIES IN
NATURE DUE TO HEAT

LOAD

$\theta_1$ $\theta_2$

0

ELONGATION

*Fig.50*

*Fig.51*